# EUROPEAN PATENT SPECIFICATION

(11) **EP 3 540 642 B1**
(45) Date of publication and mention of the grant of the patent: **19.11.2025**
(21) Application number: 19162174.7
(22) Date of filing: 12.03.2019
(51) Int. Cl.: G06V 20/56

(54) **IMAGE PROCESSING DEVICE, OBJECT RECOGNITION DEVICE, DEVICE CONTROL SYSTEM, MOVABLE OBJECT, IMAGE PROCESSING METHOD, AND COMPUTER-READABLE RECORDING MEDIUM**
BILDVERARBEITUNGSVORRICHTUNG, OBJEKTERKENNUNGSVORRICHTUNG, VORRICHTUNGSTEUERUNGSSYSTEM, BEWEGLICHES OBJEKT, BILDVERARBEITUNGSVERFAHREN UND COMPUTERLESBARES AUFZEICHNUNGSMEDIUM
DISPOSITIF DE TRAITEMENT D'IMAGES, DISPOSITIF DE RECONNAISSANCE D'OBJETS, SYSTÈME DE COMMANDE DE DISPOSITIFS, OBJET MOBILE, PROCÉDÉ DE TRAITEMENT D'IMAGES ET SUPPORT D'ENREGISTREMENT LISIBLE SUR ORDINATEUR

(30) Priority: 16.03.2018 JP 2018050200
(43) Date of publication of application: 18.09.2019
(73) Proprietor: Ricoh Company, Ltd., Tokyo 143-8555 (JP)
(72) Inventor: MOTOHASHI, Naoki, Tokyo, 143-8555 (JP)
(74) Representative: SSM Sandmair

(56) References cited:
- EP-A1- 3 293 671
- CN-B- 104 902 261
- YIRUO DAI ET AL: "Complex ground plane detection based on V-disparity map in off-road environment", 2013 IEEE INTELLIGENT VEHICLES SYMPOSIUM (IV), IEEE, 23 June 2013 (2013-06-23), pages 1137 - 1142, XP032502029, ISSN: 1931-0587, [retrieved on 20131010], DOI: 10.1109/IVS.2013.6629619
- LABAYRADE R ET AL: "Real time obstacle detection in stereovision on non flat road geometry through "V-disparity" representation", INTELLIGENT VEHICLE SYMPOSIUM, 2002. IEEE JUN 17-21, 2002, PISCATAWAY, NJ, USA,IEEE, vol. 2, 17 June 2002 (2002-06-17) - 21 June 2002 (2002-06-21), pages 646 - 651, XP010635896, ISBN: 978-0-7803-7346-4

## Description

### BACKGROUND OF THE INVENTION

### 1. Field of the Invention

Embodiments relate to an image processing device, an object recognition device, a device control system, a movable object, an image processing method, and a computer-readable recording medium

### 2. Description of the Related Art

Conventionally, body structures of automobiles, and the like, have been developed in terms of safety of automobiles as to how pedestrians and occupants in an automobile are protected when the automobile crashes into pedestrians. Furthermore, in recent years, technologies of detecting persons and automobiles at high speed have been developed due to improvements in information processing technologies and image processing technologies. By using these technologies, automobiles having a control function of AEB (automatic emergency braking: collision damage reduction braking) installed therein have been developed to prevent crashes before happens by automatically applying a brake before an automobile crashes into an object. Moreover, ACC (adaptive cruise control), which is the control function to recognize a forward vehicle and automatically follow it, has been already launched on the market as a vehicle-mounted system to reduce driver's loads during driving in addition to safe performance.

To perform the above controls, the distance from the automobile to an object such as person or different automobile needs to be measured with accuracy and, for this purpose, distance measurement using millimeter-wave radar and laser radar, distance measurement using a stereo camera, and the like, have been put into practical use. To put the automatic control of vehicles to practical use, detection on objects appearing in the screen and control on each object are needed based on distance information on a measured distance. For example, it is expected to change control based on whether a detected object is a pedestrian or a vehicle.

In the case of distance measurement with a stereo camera, a disparity image (an example of a distance image) is generable based on the amount of deviation (disparity) between local regions captured by the cameras on the right and left and the distance between the object ahead and the corresponding vehicle is measurable. Then, a clustering process is performed to detect a group of disparity pixels present in the similar distance (having the similar disparity value) as a single object, and it is detected as an object having a certain size so that an object present in the front is detectable. However, there is a problem in that, when all the disparity pixels of a disparity image is clustered, disparity pixels of a white line on a road surface, or the like, are also detected as an object as well as the target object to be detected and part of a road surface, which is supposed to be flat, is mistakenly detected as an object. In this case, a problem arises such that the system determines that there is an object in the front and for example applies an emergent brake.

One of the methods to solve the above problem is to generate a V-Disparity map (the vertical axis: the vertical coordinate of a disparity image, the horizontal axis: a disparity value) (hereafter, simply referred to as "V map" in some cases) (an example of a frequency image) in which the horizontal coordinate (hereafter, referred to as "dp coordinate" in some cases) indicated by a disparity value (an example of a distance value) of a disparity pixel is voted for with regard to each disparity pixel (a point in a disparity image) with respect to the vertical position (the position of the y-coordinate) in the disparity image, and estimate a road surface form by using a statistical technique such as a least-square method with regard to a group of points (hereafter, referred to as "disparity points" in some cases) voted for in the V map. Here, as described above, the V-Disparity map is a two-dimensional histogram representing the frequency distribution of disparity values and having its vertical axis as the y axis of a disparity image and the horizontal axis as a disparity value (or distance) of a disparity image. Voting means processing to increment the value (pixel value) (the initial value=0) of the disparity point at a predetermined coordinate in the V map by 1. Clustering processing with disparity pixels in a disparity image, corresponding to disparity points present at a position higher than an estimated road surface may suppress the problem of mistakenly detecting unnecessary disparity pixels detected on a road surface, or the like, as an object.

According to a disclosed technology of estimating road surface forms (see Japanese Unexamined Patent Application Publication No. 2015-075800), a road surface form is estimated with accuracy when the major part of an image is occupied with objects other than the road surface, when the road surface has a high gradient, and when an obstacle has a gradient, instead of being vertical, with respect to the road surface and it has a disparity distribution similar to that of the road surface. Specifically, with the technology disclosed in Japanese Unexamined Patent Application Publication No. 2015-075800, the disparity gradient of the pixel of interest in a disparity image with respect to the adjacent pixel is first calculated. Then, the gradient threshold with regard to the pixel (disparity) is calculated from the previously defined table, and when the previously calculated gradient is more than the threshold, the pixel of interest is regarded as a pixel (disparity) of a road surface and it is voted for in a V map. This technique is executed on all the pixels to form a V map. Thus, this technology reduces the risks of including object disparities other than a road surface in a V map and estimates a road surface form with accuracy.

YIRUO DAI ET AL, "Complex ground plane detection based on V-disparity map in off-road environment", 2013 IEEE INTELLIGENT VEHICLES SYMPOSIUM (IV), IEEE, doi:10.1109/IVS.2013.6629619, ISSN 1931-0587, (20130623), pages 1137 - 1142 describes an enhancement of traditional V-disparity algorithm for off-road environment. The enhanced method can acquire the parameters of ground plane such as slope and pit.

CN 104 902 261 B1 discloses a device for road surface identification in low-definition video streaming.

EP 3 293 671 A1 provides an image processing device, an image processing method, and a program that enable road surface detection with accuracy.

According to the technology disclosed in Japanese Unexamined Patent Application Publication No. 2015-075800, when a threshold table is generated, the maximum possible gradient of a road surface is previously defined and the gradient threshold for a disparity value is calculated; however, this method assumes that the disparity gradient of a road surface and the disparity gradient of an object are separable. Generally, in the case of a far distance, poor disparity accuracy sometimes makes it difficult to clearly separate the disparity gradient of a road surface and the disparity gradient of an object. That is, a group of disparities of a road surface in a V map and a group of disparities of an object sometimes have a similar distribution pattern. In such a case, it is difficult to eliminate disparities other than a road surface. Furthermore, in consideration of changes in the disparity accuracy in accordance with a distance, it is also difficult to determine the maximum gradient for separating from an object disparity at each disparity value. Particularly, in reality, there are road surfaces that have a high gradient of more than 25%, and in such a case, the disparity distribution in a V map is likely to be similar to that of an object disparity. Furthermore, in some applications, a high gradient can be the target to be detected, and in such a case, setting a high threshold may cause all the disparity gradients to be lower than the threshold and make it difficult to separate an object disparity and a road surface disparity at all. Therefore, in consideration of the actual operation, it is difficult to determine the presence or absence of a vote at each pixel when a V map is generated. That is, in a process to generate a V map, the number of disparity points and the disparity distribution in a V map are changed due to the weather (sunny, rainy, snowy, or the like) and the time (morning, noon, evening, night, or the like) as well as the form of the actual road surface (flat, uphill, downhill, bank, or the like) described above, and thus it is difficult to estimate the optimum road surface.

In consideration of the foregoing, there is a need to provide an image processing device, an object recognition device, a device control system, a movable object, an image processing method, and a computer-readable recording medium having a program that make it possible to improve the accuracy of a process to estimate a road surface so as to have robustness to the actual operation.

### SUMMARY OF THE INVENTION

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS

FIGS. 1A, 1B, and 1C are diagrams that illustrate an example of a vehicle having a device control system according to a first embodiment installed therein;
FIG. 2 is a diagram that illustrates an example of the external appearance of the object recognition device according to the first embodiment;
FIG. 3 is a diagram that illustrates an example of the hardware configuration of the object recognition device according to the first embodiment;
FIG. 4 is a diagram that illustrates an example of the configuration of functional blocks of the object recognition device according to the first embodiment;
FIG. 5 is a diagram that illustrates an example of a V map generated from a disparity image;
FIG. 6 is a diagram that illustrates an example of a U map generated from a disparity image;
FIG. 7 is a diagram that illustrates an example of the configuration of functional blocks of the road-surface estimating unit in the object recognition device according to the first embodiment;
FIG. 8 is a diagram that illustrates operation to generate a V map;
FIG. 9 is a diagram that illustrates an operation to divide a V map into a predetermined number of divisions;
FIG. 10 is a diagram that illustrates an example of a multistage estimation process by the road-surface estimating unit according to the first embodiment;
FIG. 11 is a diagram that illustrates an advantage of the multistage estimation process according to the first embodiment;
FIG. 12 is a diagram that illustrates an advantage of the multistage estimation process according to the first embodiment;
FIG. 13 is a flowchart that illustrates an example of operations of a road-surface estimation process by the road-surface estimating unit according to the first embodiment;
FIG. 14 is a diagram that illustrates an example of the configuration of functional blocks of a road-surface estimating unit in the object recognition device according to a second embodiment;
FIGS. 15A and 15B are diagrams that illustrate examples of a multistage estimation process by the road-surface estimating unit according to the second embodiment;
FIG. 16 is a flowchart that illustrates an example of operations of the road-surface estimation process by the road-surface estimating unit according to the second embodiment;
FIG. 17 is a diagram that illustrates an example of the configuration of functional blocks of a road-surface estimating unit in the object recognition device according to a third embodiment;
FIG. 18 is a diagram that illustrates an example of a multistage estimation process by the road-surface estimating unit according to the third embodiment;
FIGS. 19A and 19B are diagrams that illustrate the advantage of the combination of the multistage estimation processes according to the first embodiment and the second embodiment; and
FIG. 20 is a flowchart that illustrates an example of operations of a road-surface estimation process by the road-surface estimating unit according to a third embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

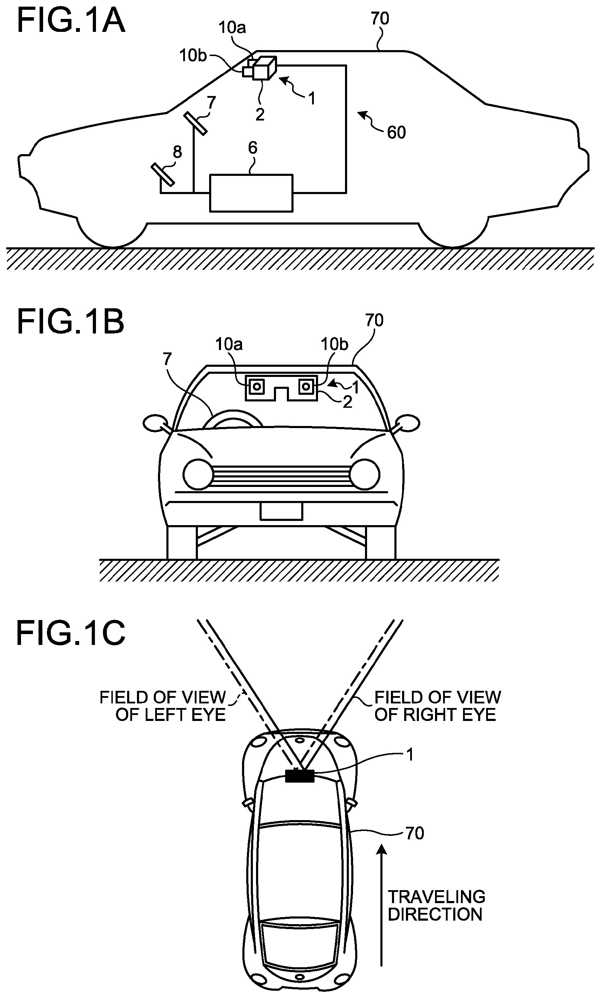

With reference to FIGS. 1 to 20, a detailed explanation is given below of an embodiment of an image processing device, an object recognition device, a device control system, a movable object, an image processing method, and a computer-readable recording medium having a program according to the present invention. The present invention is not limited to the embodiment below, and components in the embodiment below include the ones that may be easily developed by a person skilled in the art, substantially the same ones, and the ones within what is called the range of equivalents. Furthermore, various types of omission, replacement, modification, and combination may be made to components without departing from the scope of the embodiment below.

### First embodiment

### Schematic configuration of a vehicle including an object recognition device

FIGS. 1A, 1B, and 1C are diagrams that illustrate an example of a vehicle having a device control system according to a first embodiment installed therein. With reference to FIGS. 1A, 1B, and 1C, an explanation is given of a case where, for example, a device control system 60 according to the present embodiment is installed in a vehicle 70.

With regard to FIG. 1, FIG. 1A is a side view of the vehicle 70 (an example of a movable object) having the device control system 60 installed therein, and it is a schematic view of the installation form of the device control system 60; FIG. 1B is a front view of the vehicle 70; and FIG. 1C is a plan view (top view) of the vehicle 70.

As illustrated in FIGS. 1A, 1B, and 1C, the vehicle 70, which is an automobile, has the device control system 60 installed therein. The device control system 60 includes an object recognition device 1 disposed in a vehicle cabin that is a cabin space in the vehicle 70; a vehicle control device 6 (control device); a steering wheel 7; and a brake pedal 8.

The object recognition device 1 has an image capturing function to capture images in the traveling direction of the vehicle 70, and it is placed, for example, near the rearview mirror on the inner side of the front window of the vehicle 70. Although the configuration and operation are described later in detail, the object recognition device 1 includes: a main body unit 2 having each hardware component built-in; and an imaging unit 10a and an imaging unit 10b secured to the main body unit 2. The imaging units 10a, 10b are secured to the main body unit 2 so as to capture an object in the traveling direction of the vehicle 70. As illustrated in FIG. 1C, there is a deviation between the field of view (the field of view of the right eye) captured by the imaging unit 10a and the field of view (the field of view of the left eye) captured by the imaging unit 10b, and this is measured as a disparity.

The vehicle control device 6 is an ECU (electronic control unit) that executes various types of vehicle control based on recognition information received from the object recognition device 1. As examples of the vehicle control, the vehicle control device 6 executes steering control to avoid obstacles by controlling a steering system (an example of the control target) including the steering wheel 7, brake control to reduce the speed of the vehicle 70 or stop it by controlling the brake pedal 8 (an example of the control target), and the like, based on recognition information received from the object recognition device 1.

Executing vehicle control such as steering control or brake control with the device control system 60 including the object recognition device 1 and the vehicle control device 6 makes it possible to improve driving safety of the vehicle 70.

Although the object recognition device 1 captures images in front of the vehicle 70 as described above, this is not a limitation. That is, the object recognition device 1 may be installed so as to capture images at the back or side of the vehicle 70. In this case, the object recognition device 1 is capable of detecting the position of, for example, the following vehicle and person behind the vehicle 70 or a different vehicle and person on the side. Furthermore, the vehicle control device 6 is capable of detecting dangers when the vehicle 70 makes a lane change, merges into a lane, or the like, and executing the above-described vehicle control. Moreover, the vehicle control device 6 is capable of executing the above-described vehicle control when it is determined that there is a danger of collision based on recognition information on an obstacle behind the vehicle 70, output from the object recognition device 1, while the vehicle 70 is in the operation to back for parking, or the like.

### Configuration of the object recognition device

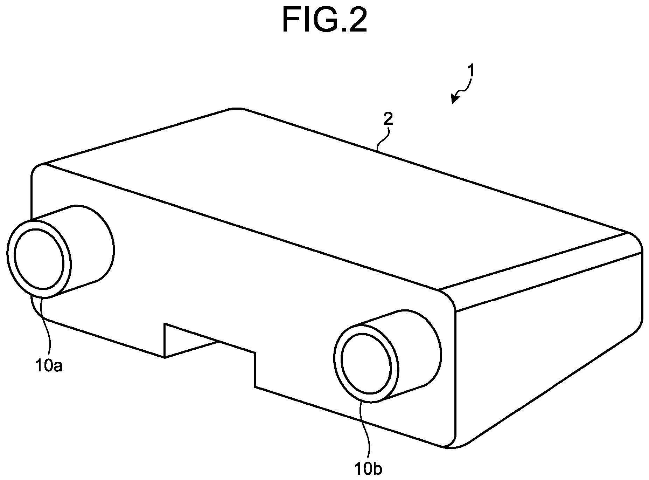

FIG. 2 is a diagram that illustrates an example of the external appearance of the object recognition device according to the first embodiment. As illustrated in FIG. 2, the object recognition device 1 includes: the main body unit 2 having each hardware component built-in; and the imaging unit 10a and the imaging unit 10b secured to the main body unit 2, as described above. The imaging units 10a, 10b are configured by using a pair of cylindrical cameras that are parallel to and are located at equivalent positions relative to the main body unit 2. Furthermore, for the convenience of explanation, the imaging unit 10a illustrated in FIG. 2 is sometimes referred to as the right camera and the imaging unit 10b as the left camera.

### Hardware configuration of the object recognition device

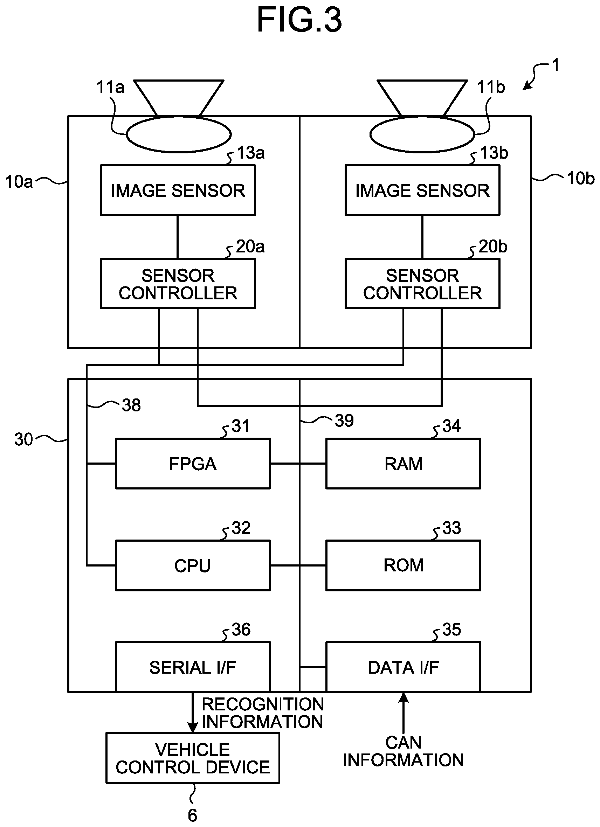

FIG. 3 is a diagram that illustrates an example of the hardware configuration of the object recognition device according to the first embodiment. With reference to FIG. 3, the hardware configuration of the object recognition device 1 according to the present embodiment is explained.

As illustrated in FIG. 3, the object recognition device 1 includes the imaging unit 10a (first imaging unit), the imaging unit 10b (second imaging unit), and an information processing unit 30. The imaging unit 10a and the imaging unit 10b constitute what is called a stereo camera.

The imaging unit 10a is a processing unit that captures an object in the front and generates a capture image (luminance image) (first capture image). The imaging unit 10a includes an imaging lens 11a, an image sensor 13a, and a sensor controller 20a.

The imaging lens 11a is an optical element that refracts incident light to form an image of the object on the image sensor 13a. The image sensor 13a is a semiconductor device that converts light that has entered and passed through the imaging lens 11a into electric analog image signals. The image sensor 13a is implemented by using a solid state image sensor such as CCD (charge coupled device) or CMOS (complementary metal oxide semiconductor).

The sensor controller 20a is a controller that executes exposure control on the image sensor 13a, image reading control, communications with an external circuit, transmission control on image data, and the like. The sensor controller 20a converts analog image signals obtained by the image sensor 13a into digital-form image data (hereafter, simply referred to as "image" in some cases) (capture image, luminance image) and transmits it to the information processing unit 30 at the subsequent stage.

The imaging unit 10b is a processing unit that captures an object in the front and generates a capture image (luminance image) (second capture image). The imaging unit 10b includes an imaging lens 11b, an image sensor 13b, and a sensor controller 20b. The functions of the imaging lens 11b, the image sensor 13b, and the sensor controller 20b are the same as those of the imaging lens 11a, the image sensor 13a, and the sensor controller 20a, respectively, as described above. Furthermore, the imaging lens 11a and the imaging lens 11b are installed such that the principal surfaces of the lenses are on the same plane so that the right and the left cameras capture images under the same condition.

The information processing unit 30 is a device that generates a disparity image from a luminance image obtained by each of the imaging units 10a, 10b and, based on the disparity image, performs an object recognition process to recognize an object, such as person and vehicle, appearing in the luminance image. The information processing unit 30 outputs recognition information indicating a result of an object recognition process to the vehicle control device 6. The information processing unit 30 includes an FPGA (field programmable gate array) 31, a CPU (central processing unit) 32, a ROM (read only memory) 33, a RAM (random access memory) 34, a data I/F (interface) 35, a serial I/F 36, a serial bus line 38, a data bus line 39.

The FPGA 31 is an integrated circuit that performs processing requiring real-time performance on image data. The FPGA 31 conducts, for example, gamma correction, distortion correction (parallelization for images on the right and left), and disparity calculations using block matching, generates disparity images, and writes generated disparity images in the RAM 34.

The CPU 32 is an arithmetic device that controls each function of the information processing unit 30. The CPU 32 for example controls the sensor controllers 20a, 20b of the imaging units 10a, 10b. Furthermore, the CPU 32 acquires CAN (controller area network) information (e.g., vehicle speed, acceleration, rudder angle, or yaw rate) on the vehicle 70 via the data I/F 35 and performs an object recognition process on an object by using a luminance image and a disparity image stored in the RAM 34 in accordance with an object recognition processing program stored in the ROM 33.

The ROM 33 is a non-volatile storage device that stores an object recognition processing program for the CPU 32 to perform an object recognition process of the information processing unit 30. The object recognition processing program is an example of an image processing program.

The RAM 34 is a volatile storage device used as a work area for the CPU 32.

The data I/F 35 is an interface that is connected to the CAN of the vehicle 70 to receive CAN information. The serial I/F 36 is an interface for transmitting recognition information generated during an object recognition process by the information processing unit 30 to for example the vehicle control device 6 outside.

The serial bus line 38 is a bus for transmitting, to the sensor controllers 20a, 20b, control data for changing sensor exposure values from the FPGA 31 or the CPU 32, control data for changing image reading parameters, various types of setting data, and the like. As illustrated in FIG. 3, the data bus line 39 is a bus for connecting the sensor controllers 20a, 20b, the FPGA 31, the CPU 32, the ROM 33, the RAM 34, the data I/F 35, and the serial I/F 36 such that they can communicate with each other.

Although the information processing unit 30 includes the FPGA 31 as an integrated circuit that generates disparity images, this is not a limitation, and it may include other integrated circuits, such as ASIC (application specific integrated circuit).

The hardware configuration of the object recognition device 1 illustrated in FIG. 3 is an example, and this is not a limitation; all the components illustrated in FIG. 3 do not need to be included, or other components may be included.

### Configuration and operation of functional blocks of the object recognition device

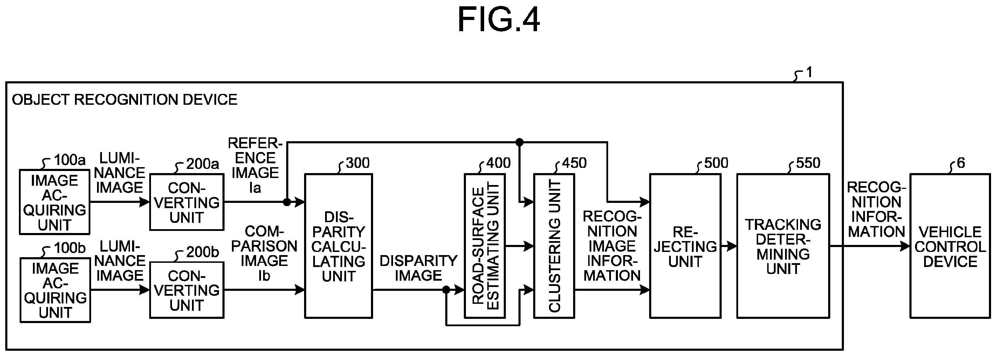

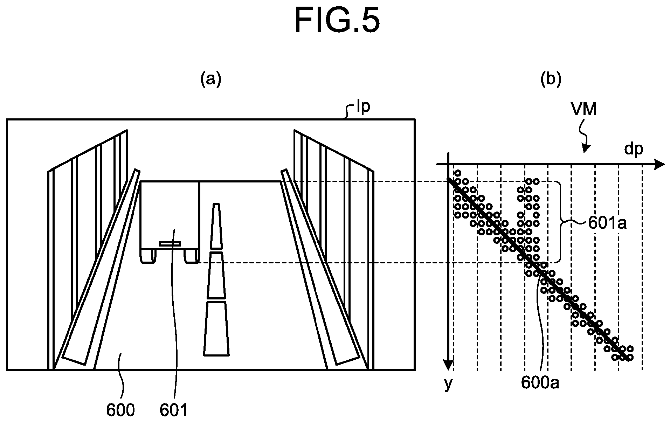

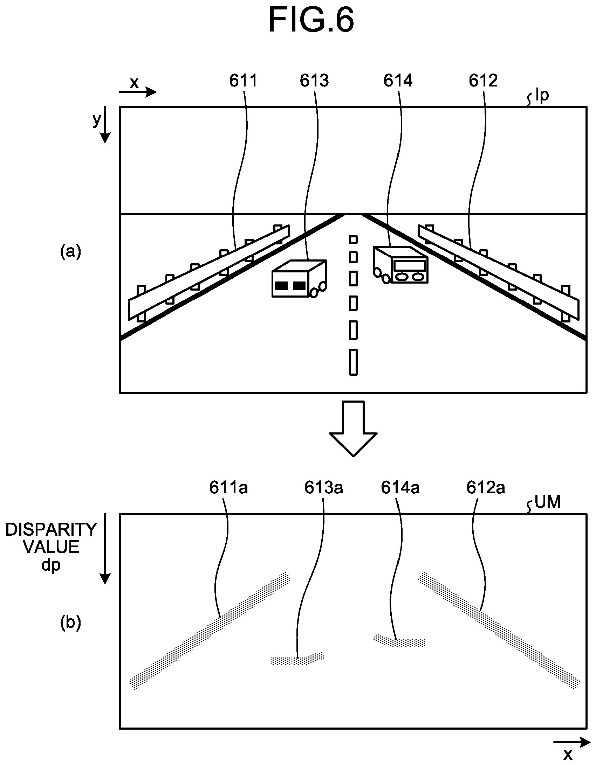

FIG. 4 is a diagram that illustrates an example of the configuration of functional blocks of the object recognition device according to the first embodiment. FIG. 5 is a diagram that illustrates an example of a V map generated from a disparity image. FIG. 6 is a diagram that illustrates an example of a U map generated from a disparity image. With reference to FIGS. 4 to 6, the configuration and operation of functional blocks of the object recognition device 1 according to the present embodiment are explained.

As illustrated in FIG. 4, the object recognition device 1 according to the present embodiment includes image acquiring units 100a, 100b, converting units 200a, 200b, a disparity calculating unit 300 (second generating unit), a road-surface estimating unit 400, a clustering unit 450, a rejecting unit 500, and a tracking determining unit 550.

The image acquiring unit 100a is a functional unit that captures the image of an object in the front by using the right camera, generates analog image signals, and obtains a luminance image that is an image (capture image) based on the image signal. The image acquiring unit 100a is implemented by using the imaging unit 10a illustrated in FIG. 3.

The image acquiring unit 100b is a functional unit that captures the image of an object in the front by using the left camera, generates analog image signals, and obtains a luminance image that is an image (capture image) based on the image signal. The image acquiring unit 100b is implemented by using the imaging unit 10b illustrated in FIG. 3.

The converting unit 200a is a functional unit that removes noise, or the like, from image data on the luminance image obtained by the image acquiring unit 100a and converts it to generate a reference image Ia that is the basis for a disparity image. The converting unit 200a is implemented by using the FPGA 31 illustrated in FIG. 3.

The converting unit 200b is a functional unit that removes noise, or the like, from image data on the luminance image obtained by the image acquiring unit 100b and converts it to generate a comparison image Ib that is the basis for a disparity image. The converting unit 200b is implemented by using the FPGA 31 illustrated in FIG. 3.

Specifically, the converting units 200a, 200b output the reference image Ia and the comparison image Ib, respectively, to the disparity calculating unit 300 based on the two luminance images output from the image acquiring units 100a, 100b. Furthermore, the converting unit 200a outputs the reference image Ia to the rejecting unit 500.

The disparity calculating unit 300 is a functional unit that derives a disparity value dp with respect to each pixel of the reference image Ia by using block matching, or the like, on a local area on the basis of the reference image Ia and the comparison image Ib received from the converting units 200a, 200b, respectively, and generates a disparity image in which each pixel of the reference image Ia is related to a disparity value. The disparity calculating unit 300 outputs the generated disparity image to the road-surface estimating unit 400 and the clustering unit 450. The disparity calculating unit 300 is implemented by using the FPGA 31 illustrated in FIG. 3.

The road-surface estimating unit 400 is a functional unit that generates a final V map by voting for the disparity point at the corresponding coordinates in the V map based on each pixel value (disparity value) of the disparity image received from the disparity calculating unit 300, retrieves sample points from the disparity points voted for in the V map, and applies a linear approximation (or a curve approximation) to the group of retrieved sample points to estimate the form of a road surface. Here, a section (a) of FIG. 5 illustrates a disparity image Ip output from the disparity calculating unit 300, and a section (b) of FIG. 5 illustrates a V map VM generated from the disparity image Ip by the road-surface estimating unit 400. As illustrated in the section (b) of FIG. 5, the vertical axis of the V map VM corresponds to the y-coordinate of the disparity image Ip, and the horizontal axis thereof corresponds to the disparity value dp. During generation of the V map VM, the dp coordinate in the V map VM is voted for based on the disparity value present in a horizontal line of the disparity image Ip at the predetermined y-coordinate, and therefore the frequency of a disparity value is stored in the pixel value at each set of coordinates of the V map VM.

For example, a road surface 600 and a vehicle 601 appear in the disparity image Ip illustrated in the section (a) of FIG. 5. The road surface 600 in the disparity image Ip corresponds to an estimated road surface 600a in the V map VM, and the vehicle 601 corresponds to a vehicle portion 601a. The estimated road surface 600a is a road surface form that is estimated from a disparity point that corresponds to the road surface 600 in the V map VM, as described below.

Furthermore, the road-surface estimating unit 400 applies a linear approximation to positions (sample points) that are estimated to be a road surface based on the generated V map VM. Specifically, the road-surface estimating unit 400 retrieves sample points that are representative points needed to estimate a road surface form from the disparity points voted for in the V map VM and applies a linear approximation to them by using a least-square method, or the like, thereby estimating a road surface form to obtain the estimated road surface 600a. When a road surface is flat, an approximation is possible with a single straight line; however, when the gradient of a road surface changes, the V map VM need to be divided into divisions for high-accuracy linear approximation.

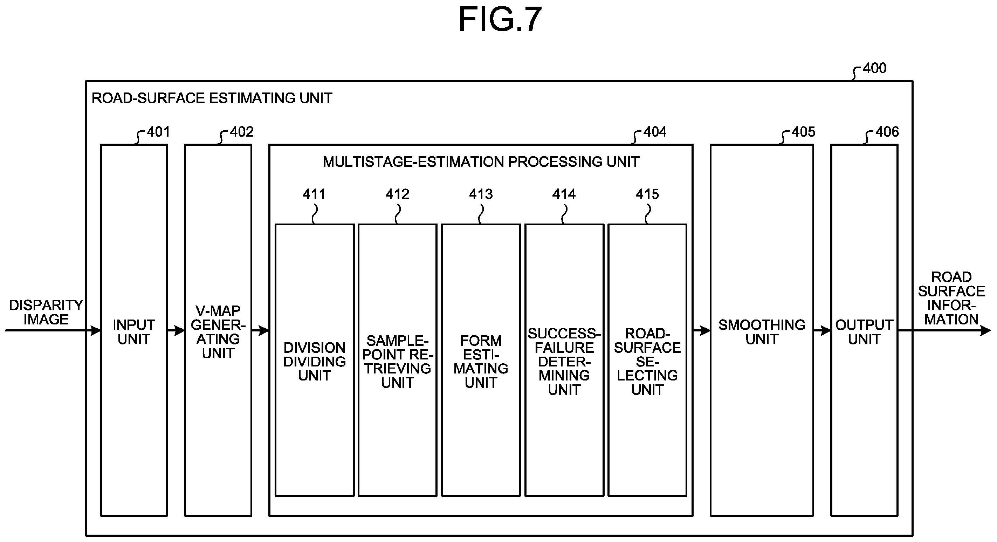

The shorter the distance to the corresponding vehicle is, the larger the disparity value is; therefore, a disparity value in the lower section of a disparity image has a larger value than a disparity value in the upper section thereof. Therefore, as illustrated in FIG. 5(b), the estimated road surface 600a in the V map VM has a form falling diagonally from top left to bottom right (rising diagonally from bottom right to top left). Here, disparities representing the object are voted for in the range (in the range between horizontal dashed lines illustrated in FIG. 5) of the y-coordinates where the object is present. As the object is present at a position higher than the road surface, the distribution in the V map VM has a form extending in a vertical direction. This is because the distance from the object recognition device 1 is substantially the same with regard to the same object and the disparity values obtained for the object are similar numerical values. The detailed configuration and operation of the road-surface estimating unit 400 are explained later with reference to FIGS. 7 to 12.

In the V map VM, the vehicle portion 601a, which is a mass located at a higher position than the estimated road surface 600a, corresponds to the vehicle 601 that is an object on the actual road surface. When the clustering unit 450 described later generates a U-Disparity map, only information above the estimated road surface is used for noise removal.

The clustering unit 450 is a functional unit that detects an object appearing in a disparity image on the basis of a reference image (luminance image) received from the converting unit 200a, a disparity image received from the disparity calculating unit 300, and a V map and information on an estimated road surface output from the road-surface estimating unit 400. Specifically, the clustering unit 450 first generates a U-Disparity map (hereafter, simply referred to as "U map" in some cases) UM illustrated in a section (b) of FIG. 6 to recognize objects by using only information located above the estimated road surface, estimated by the road-surface estimating unit 400, in the V map, i.e., by using information that is equivalent to a left guardrail 611, a right guardrail 612, a vehicle 613, and a vehicle 614 in the disparity image Ip illustrated in for example a section (a) of FIG. 6. Here, the U-Disparity map is a two-dimensional histogram indicating the frequency distribution of the disparity value dp, where the horizontal axis is the x axis of the disparity image Ip and the vertical axis is the disparity value dp (or distance) of the disparity image Ip. The left guardrail 611 in the disparity image Ip illustrated in the section (a) of FIG. 6 is equivalent to a left guardrail portion 611a on the U map UM, the right guardrail 612 is equivalent to a right guardrail portion 612a, the vehicle 613 is equivalent to a vehicle portion 613a, and the vehicle 614 is equivalent to a vehicle portion 614a. Furthermore, the clustering unit 450 may generate a Real U-Disparity map (overhead image) from the disparity image Ip. Here, a Real U-Disparity map is a two-dimensional histogram where the horizontal axis is the actual distance in a direction from the imaging unit 10b (the left camera) to the imaging unit 10a (the right camera) and the vertical axis is the disparity value dp (or the distance, in the depth direction, converted from the disparity value dp) of the disparity image.

Furthermore, not only the reference image Ia input to the clustering unit 450 from the converting unit 200a but also the comparison image Ib input from the converting unit 200b may be the target.

The clustering unit 450 is capable of identifying, based on the generated U map, the position and the width (xmin, xmax) of an object in the x-axis direction on the disparity image and the reference image Ia. Furthermore, the clustering unit 450 is capable of identifying the actual depth of an object based on information (dmin, dmax) on the height of the object on the generated U map. Furthermore, based on the received V map, the clustering unit 450 is capable of identifying the position and the height (ymin="the y-coordinate that is equivalent to the maximum height from the road surface with the maximum disparity value", ymax="the y-coordinate indicating the height of the road surface obtained from the maximum disparity value") of an object in the y-axis direction on the disparity image and the reference image Ia. Furthermore, the clustering unit 450 is capable of identifying the actual size of an object in the x-axis direction and the y-axis direction based on the width (xmin, xmax) of the object in the x-axis direction, the height (ymin, ymax) in the y-axis direction, and the disparity value dp that corresponds to each of them, identified on the disparity image. As described above, by using the V map and the U map, the clustering unit 450 is capable of identifying the position, the actual width, the height, and the depth of an object in the reference image Ia. Moreover, as the clustering unit 450 identifies the position of an object in the reference image Ia, the position in a disparity image may be determined, and the distance to the object may be also identified.

The clustering unit 450 is capable of determining what an object is on the basis of the identified actual size (width, height, depth) of the object by using the following (Table 1). For example, when the width of the object is 1300 [mm], the height is 1800 [mm], and the depth is 2000 [mm], it may be determined that the object is a "standard-sized automobile". Here, the information relating the width, the height, and the depth with the type of object (object type) as in (Table 1) may be stored as a table in the RAM 34, or the like.

### [Table 1]

**Table 1**

| Object type | Width | Height | Depth | Unit [mm] |
|---|---|---|---|---|
| Motorbike, bicycle | <1100 | <2500 | >1000 | |
| Pedestrian | <1100 | <2500 | ≤1000 | |
| Small-sized automobile | <1700 | <1700 | <10000 | |
| Standard-sized automobile | <1700 | <2500 | <10000 | |
| Truck | <3500 | <3500 | <15000 | |
| Others | Not applied to above sizes | | | |

Then, the clustering unit 450 outputs information about an image (recognition image) of a detected object (e.g., the coordinate indicating a position in the reference image Ia, or the size) (hereafter, simply referred to as "recognition image information").

The rejecting unit 500 is a functional unit that makes a determination for rejection to determine whether a recognition image indicated by recognition image information is to be rejected or not based on the reference image Ia output from the converting unit 200a and recognition image information output from the clustering unit 450. Here, the rejection represents a process to exclude the object from the target for a subsequent process (a tracking process, or the like). The rejecting unit 500 may include a result of the rejection determination in corresponding recognition image information.

The tracking determining unit 550 is a functional unit that determines whether tracking is to be performed on an object included in a recognition image in accordance with a result of a rejection determination by the rejecting unit 500. For example, the tracking determining unit 550 determines that tracking is performed on the object that the rejecting unit 500 has not determined is to be rejected, includes information indicating that tracking is to be performed in the recognition image information on the object, and outputs it as recognition information to the vehicle control device 6.

Each of the road-surface estimating unit 400, the clustering unit 450, the rejecting unit 500, and the tracking determining unit 550 in the object recognition device 1 illustrated in FIG. 4 is implemented when the CPU 32 illustrated in FIG. 3 executes a program (object recognition processing program). All or part of the road-surface estimating unit 400, the clustering unit 450, the rejecting unit 500, and the tracking determining unit 550 may be implemented by using the FPGA 31, which is a hardware circuit, or other hardware circuits (ASIC, or the like).

The "image processing device" according to the present invention may be the road-surface estimating unit 400 or the information processing unit 30 including the road-surface estimating unit 400.

The function of each functional unit in the object recognition device 1 is conceptually illustrated in FIG. 4, and this configuration is not a limitation. For example, multiple functional units, illustrated as independent functional units, in the object recognition device 1 illustrated in FIG. 4 may be configured as a single functional unit. Furthermore, a function provided by a single functional unit in the object recognition device 1 illustrated in FIG. 4 may be divided into multiple functions and they may be configured as multiple functional units.

### Configuration and operation of functional blocks of the road-surface estimating unit

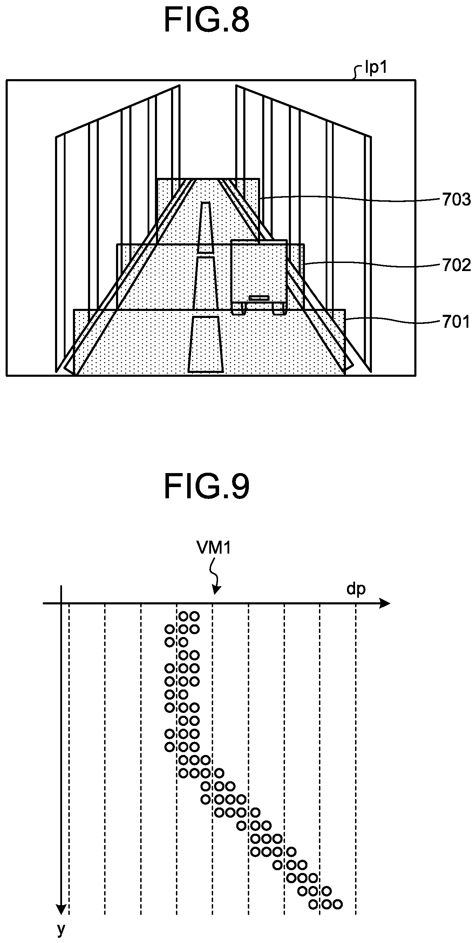

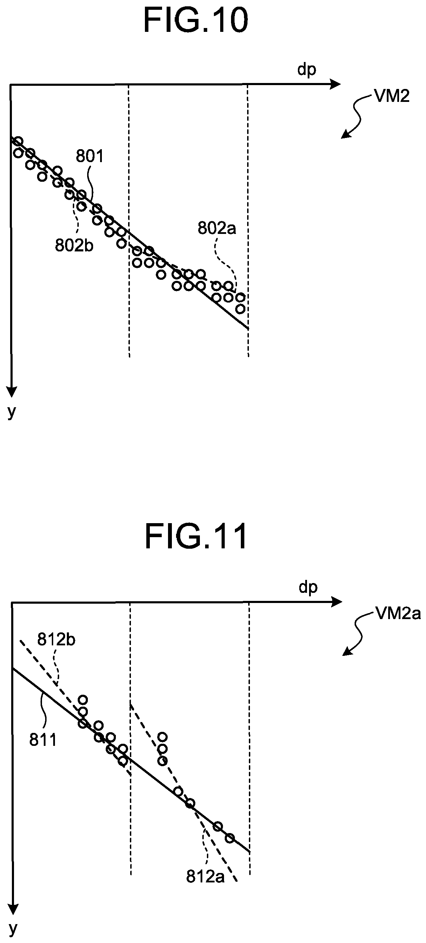

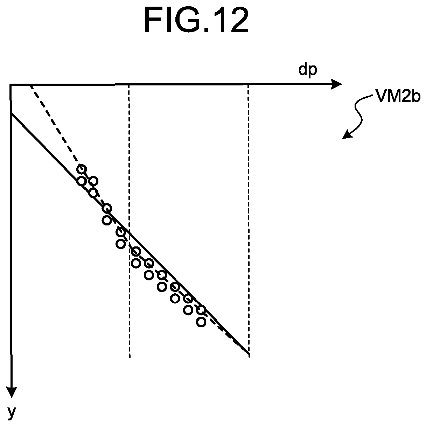

FIG. 7 is a diagram that illustrates an example of the configuration of functional blocks of the road-surface estimating unit in the object recognition device according to the first embodiment. FIG. 8 is a diagram that illustrates operation to generate a V map. FIG. 9 is a diagram that illustrates an operation to divide a V map into a predetermined number of divisions. FIG. 10 is a diagram that illustrates an example of a multistage estimation process by the road-surface estimating unit according to the first embodiment. FIG. 11 is a diagram that illustrates an advantage of the multistage estimation process according to the first embodiment. FIG. 12 is a diagram that illustrates an advantage of the multistage estimation process according to the first embodiment. With reference to FIGS. 7 to 12, the specific configuration and operation of the functional blocks in the road-surface estimating unit 400 according to the present embodiment are explained.

As illustrated in FIG. 7, the road-surface estimating unit 400 includes an input unit 401, a V-map generating unit 402 (first generating unit), a multistage-estimation processing unit 404, a smoothing unit 405 (correcting unit), and an output unit 406.

The input unit 401 is a functional unit that takes the input of a disparity image from the disparity calculating unit 300.

The V-map generating unit 402 is a functional unit that generates a V map by voting for a corresponding disparity point in the V map based on the disparity value of each disparity pixel of the disparity image, input from the input unit 401. For generation of a V map by the V-map generating unit 402, the y-coordinate of a disparity image has a correspondence relation with the y-coordinate of a V map, and any disparity point in a horizontal line at the corresponding y-coordinate of the V map is voted for based on a disparity value in a horizontal line at the specific y-coordinate of a disparity image. Therefore, as some of the disparity values included in the same horizontal line of the disparity image have the same value, the frequency of a disparity value is stored in a disparity point at any coordinates of the V map. In a specific horizontal line of a disparity image, as disparity values for the same road surface have a similar value, disparity points corresponding to the road surface are voted for in the V map in a concentrated manner.

The V-map generating unit 402 may cast a vote in a V map based on the disparity values of all the disparity pixels of a disparity image; however, as in a disparity image Ip1 illustrated in FIG. 8, predetermined areas (e.g., vote areas 701 to 703 illustrated in FIG. 8) may be set, and votes may be cast based on only the disparity values of the disparity pixels included in the area. For example, by using the characteristics that the road surface becomes narrower toward a vanishing point in a farther distance, as illustrated in FIG. 8, it is possible to use a method of setting a predetermined number of vote areas corresponding to the width of the road surface. By thus restricting vote areas, it is possible to prevent noise other than a road surface from being included in a V map.

Furthermore, votes may be cast while disparity pixels in a horizontal line of a disparity image are decimated as needed. Furthermore, decimation may be executed not only in a horizontal direction but also in a vertical direction.

The multistage-estimation processing unit 404 is a functional unit that performs a multistage estimation process by estimating a road surface in divisions obtained by dividing a V map at multiple stages, making a success-failure determination as to whether each estimated road surface is an appropriate road surface, and selecting the final estimated road surface. As illustrated in FIG. 7, the multistage-estimation processing unit 404 includes a division dividing unit 411 (dividing unit), a sample-point retrieving unit 412 (retrieving unit), a form estimating unit 413 (estimating unit), a success-failure determining unit 414 (determining unit), and a road-surface selecting unit 415 (selecting unit).

The division dividing unit 411 is a functional unit that, during a multistage estimation process, divides a predetermined division, in the dp direction (horizontal direction) of a V map, into one or more divisions in accordance with dividing at a predetermined number of stages. Here, "stage" represents a dividing pattern as to how many divisions a predetermined division is divided into. Therefore, dividing at multiple stages indicates dividing in accordance with multiple dividing patterns. For example, FIG. 9 illustrates an example where a V map VM1 is a predetermined division in whole and the predetermined division is divided into eight divisions in accordance with a specific stage. Although FIG. 9 illustrates an example where multiple divisions are generated in the dp direction, this is not a limitation, and multiple divisions may be generated in for example the y direction. This allows processing on a further restricted area by generating divisions in the y direction when, for example, the distribution position of disparities of the road surface is identifiable; thus, there is an advantage that inclusion of noise is prevented and the processing time is shortened. According to the present embodiment, an explanation is given based on the assumption that divisions are generated in the dp direction of a V map and a predetermined division is the entire width of the V map in the dp direction (horizontal direction).

In the example illustrated in FIG. 10, a multistage estimation process is performed at two stages. In this case, with regard to a V map VM2, the division dividing unit 411 regards the number of divisions at the first stage (first dividing pattern) as one and does not divide the predetermined division, that is, regards the predetermined division as a single division (it can be said that it is divided into a single division). Then, the division dividing unit 411 regards the number of divisions at the second stage (second dividing pattern) as two in the V map VM2 and equally divides the predetermined division into two divisions. Here, FIG. 10 illustrates an example where the number of stages is two; however, this is not a limitation, and the number of stages may be three or more stages for the predetermined division and divisions may be generated corresponding to each stage. Furthermore, the number of divisions at each stage does not need to be successive; for example, the number of divisions may be one at the first stage, and the number of divisions may be three at the second stage.

Furthermore, as described later, during a multistage estimation process, the sample-point retrieving unit 412 retrieves sample points from disparity points at the respective dp coordinates in the division divided at each stage.

The sample-point retrieving unit 412 is a functional unit that, during a multistage estimation process, retrieves and selects at least one or more representative points (hereafter, referred to as "sample points") from disparity points (an example of frequency points) voted for in a V map at the positions of the respective dp coordinates in each division divided by the division dividing unit 411. A method of retrieving sample points may be, for example, simply selecting the most frequent disparity point (the most frequent point) from the disparity points present in a vertical (longitudinal) direction with regard to each of the dp coordinates, or shifting the pixel at the dp coordinates of interest together with pixels on its right and left in an upward direction of a V map to restrict the area in which the disparity points of a road surface may be included, and retrieving and selecting the most frequent point from them to accurately determine the disparity points of the road surface. Alternatively, the position (coordinates) having no disparity point may be retrieved and selected as a sample point. For example, when no disparity point is present at the coordinates (dp,y) of interest but frequent disparity points are concentrated in the surrounding area, there is a possibility that the disparity point at the coordinates (dp,y) is accidentally lacked, and therefore the lacked position may be selected as a sample point. Furthermore, as described later, during a multistage estimation process, the form estimating unit 413 estimates a road surface based on a group of sample points retrieved in each division.

Furthermore, the sample-point retrieving unit 412 may remove an inappropriate sample point from retrieved sample points. This prevents, as described later, an inappropriate shape of an estimated road surface as being affected by an inappropriate sample point (fail point) when the form estimating unit 413 estimates a road surface based on a group of sample points. A method of removing fail points may be, for example, once applying a linear approximation with a least-square method by using all the sample points in the target division and removing a sample point apart from an approximate straight line by a predetermined distance. In this case, after fail points have been removed, a least-square method is again implemented to estimate a road surface so that the final estimated road surface is obtained.

The form estimating unit 413 is a functional unit that, during a multistage estimation process, estimates the form of a road surface (road surface estimation) in each division based on a group of sample points retrieved in the corresponding division by the sample-point retrieving unit 412. A method of estimating a road surface may be, for example, a method of applying a linear approximation to a group of sample points by using a least-square method, or the like, or a method of estimating a curved form by using a polynomial approximation, or the like. In the following explanation, a linear approximation is applied for road surface estimation if not otherwise specified.

In the example illustrated in FIG. 10, at the first stage where the number of divisions is one, the form estimating unit 413 uses a group of sample points retrieved by the sample-point retrieving unit 412 to obtain an estimated road surface 801 as an estimated road surface for a predetermined division in the V map VM2. Furthermore, at the second stage where the number of divisions is two, the form estimating unit 413 obtains, beginning with the one in a close distance, estimated road surfaces 802a, 802b in two divisions.

Furthermore, the form estimating unit 413 calculates the degree of reliability of an estimated road surface that is estimated at each stage and in each division so that it is used for example for a success-failure determination on an estimated road surface by the success-failure determining unit 414. For example, when a linear approximation is applied by using a least-square method to estimate a road surface at each stage and in each division, the form estimating unit 413 may calculate a coefficient of correlation as the degree of reliability of the estimated road surface. Furthermore, the method of calculating the degree of reliability is not limited to the above-described method, and any method is applicable as long as the method enables quantification of the degree of reliability of an estimated road surface.

Furthermore, as described later, during a multistage estimation process, the success-failure determining unit 414 makes a success-failure determination with regard to an estimated road surface estimated in each division and at each stage by the form estimating unit 413 as to whether the estimated road surface is appropriate.

The success-failure determining unit 414 is a functional unit that, during a multistage estimation process, makes a success-failure determination to determine whether an estimated road surface estimated at each stage and in each division by the form estimating unit 413 is appropriate (success). For example, the success-failure determining unit 414 determines that the road surface is inappropriate (failure) when it is estimated that the sample points are arranged diagonally from lower left to upper right, that is, the angle of the estimated road surface is inappropriate. This problem occurs because, for example, individual sample points are independently retrieved. Furthermore, the success-failure determining unit 414 may determine whether the estimated road surface is appropriate based on the degree of reliability of the estimated road surface at each stage and in each division, calculated by for example the form estimating unit 413. For example, the success-failure determining unit 414 determines that the estimated road surface is inappropriate (failure) when the degree of reliability of a specific estimated road surface is lower than a predetermined threshold. The success-failure determining unit 414 may make a success-failure determination for an estimated road surface based on, as well as the angle and the degree of reliability of the estimated road surface described above, the number of sample points (may be the number of disparity points) used for estimation or the continuousness between two adjacent estimated road surfaces.

In the example illustrated in FIG. 10, the success-failure determining unit 414 makes a success-failure determination for the estimated road surface 801 estimated at the first stage, in which the number of divisions is 1, and makes a success-failure determination for each of the estimated road surfaces 802a, 802b estimated at the second stage in which the number of divisions is 2.

Then, as described later, during a multistage estimation process, the road-surface selecting unit 415 selects the final estimated road surface in the predetermined division from the estimated road surfaces that are determined to be appropriate by the success-failure determining unit 414 during a success-failure determination.

Although the form estimating unit 413 calculates the degree of reliability of an estimated road surface that is estimated at each stage and in each division, this is not a limitation, and the success-failure determining unit 414 may calculate the degree of reliability.

The road-surface selecting unit 415 is a functional unit that selects the final estimated road surface in a predetermined division from estimated road surfaces that are determined to be appropriate by the success-failure determining unit 414 during a success-failure determination. For example, the road-surface selecting unit 415 selects, as the final estimated road surface in a predetermined division, the estimated road surface at the stage with the highest degree of reliability among the degrees of reliability of the estimated road surfaces at respective stages.

In the example illustrated in FIG. 10, the road-surface selecting unit 415 compares, for example, the degree of reliability of the estimated road surface 801 estimated at the first stage and the average value of the degrees of reliability of the estimated road surfaces 802a, 802b estimated at the second stage and then selects the estimated road surface at the stage with the higher degree of reliability as the final estimated road surface in the predetermined division.

As described above, the degree of reliability is determined for each stage (the average value of the degrees of reliability of estimated road surfaces in two divisions when the number of divisions is two), and the estimated road surface at the stage with the highest degree of reliability is selected; however, this is not a limitation. For example, the estimated road surface to be selected may be determined for each division. For example, in the example illustrated in FIG. 10, with regard to the right division of the two divisions, the estimated road surface with the higher degree of reliability between the estimated road surface 801 and the estimated road surface 802a is selected as the final road surface and, with regard to the left division, the estimated road surface with the higher degree of reliability between the estimated road surface 801 and the estimated road surface 802b may be selected as the final estimated road surface.

Here, with reference to FIG. 11 and FIG. 12, an advantage of the multistage estimation process is explained. FIG. 11 illustrates an advantage of the multistage estimation process when a predetermined division is subdivided to estimate a road surface in a V map VM2a in which there is a small number of disparity points. In explanation, the number of stages and the number of divisions are the same as those in FIG. 10; however they are only examples, and there is no limitation on the number of stages and the number of divisions. As illustrated in FIG. 11, in the case of a small number of disparity points, when a division is divided and a road surface is estimated individually to obtain estimated road surfaces 812a, 812b, there are risks such as an inappropriate inclination of an estimated road surface due to the effect of disparities of other than a road surface, such as disparities of objects. To solve this problem, when the predetermined division is obtained as a single division without being divided and a road surface is estimated to obtain an estimated road surface 811, there is a high possibility of appropriate road surface estimation as more than a certain number of disparity points for the road surface are available.

Furthermore, FIG. 12 illustrates an example where an appropriate road surface form may be estimated by using a road surface that is estimated in each division after a predetermined division is divided into two divisions. As in a V map VM2b illustrated in FIG. 12, when the gradient of a road surface changes in the middle of a predetermined division, a complicated road surface form may be accurately determined by dividing it into divisions for road surface estimation.

As described above, a road surface is estimated in a predetermined division while the number of divisions is changed at each of stages, and a success-failure determination is made to determine whether each estimated road surface is appropriate, whereby robust road surface form estimation is possible in various situations, for example, when there is a large or small number of disparity points, or when disparity dispersion occurs.

The final estimated road surface in a predetermined division does not always need to be selected from estimated road surfaces that are estimated during the above-described operations of the division dividing unit 411, the sample-point retrieving unit 412, and the form estimating unit 413. For example, when the degrees of reliability of all of the estimated road surfaces estimated in a specific division (there are multiple estimated road surfaces that are estimated in the corresponding division as there are multiple stages) divided by the division dividing unit 411 are less than a predetermined threshold, the road-surface selecting unit 415 may regard estimation on all the road surfaces in the division as a failure and determine that a historical road surface or a default road surface in the division is an estimated road surface in the division. Specifically, there is a method of, for example, interpolating a division for which estimation has been failed using a road surface that is a historical road surface and corresponds to the division. Here, the historical road surface represents the previously estimated road surface that is estimated in a frame, one or more frames before, and it may be the average of road surfaces estimated in a predetermined number of previous frames. Furthermore, the default road surface represents a road surface when it is assumed to be a flat road surface.

Furthermore, when each estimated road surface is determined to be a success during a success-failure determination, the final estimated road surface may be selected based on a determination on the positional relationship between estimated road surfaces at the boundary between two divisions (when the front division is a division n, the end point of the division n matches the start point of a subsequent division n+1). For example, in the example illustrated in FIG. 10, where the intersection points between the estimated road surfaces 801, 802a, and 802b at the division boundary positions are intersection points A to C, respectively, when both the intersection points B, C are located on the upper side or the lower side of the intersection point A in the Y-axis direction, the estimated road surfaces 802a, 802b are selected as the final estimated road surfaces. As illustrated in FIG. 10, when the gradient changes at the division boundary, adopting the estimated road surface 801 makes it difficult to estimate a road surface with the accurate gradient; thus, when both the intersection points B, C are located on the upper side or the lower side of the intersection point A, the estimated road surfaces 802a, 802b are adopted so that road surface estimation with the accurate gradient is enabled.

As described above, the division dividing unit 411 equally divides a predetermined division into multiple divisions at a specific stage; however, this is not a limitation. For example, when a predetermined division, whose length is 100, is divided into two divisions, it is not always equally divided by (50,50) but also may be divided by changing the length of each division, such as (20,80) or (80,20). Furthermore, a division may be divided based on a length that is converted into the actual distance from a disparity value. The actual distance per pixel in a disparity has the property of being longer in a farther distance. Therefore, in the V map with the horizontal axis as in FIG. 10, as the left side represents a position in a far distance, when a division is divided by the actual distance (e.g., at intervals of 10 [m]), a division on the left side is shorter than that on the right side. Furthermore, when the tilt of a road surface changes in a predetermined division, the change position is unknown until it is estimated; therefore, a method is provided to divide a predetermined division at multiple dividing positions, calculate the average value of the degrees of reliability of estimated road surfaces that are estimated after dividing, and adopts a group of estimated road surfaces at the dividing position where the average value becomes maximum and at that time. This may improve the accuracy of road surface estimation when a predetermined division is divided into two divisions. It is obvious that, even when there are three or more divisions, they may be also divided and processed with various combinations of lengths of divisions.

The smoothing unit 405 is a functional unit that performs smoothing processing on an estimated road surface estimated (selected) by the multistage-estimation processing unit 404. When a V map is divided into multiple divisions, there is a possibility that the road surfaces estimated in divisions are not continuous. Therefore, a correction is performed such that, out of the estimated road surfaces in two divisions, the coordinates of the start point of one of the estimated road surfaces and the coordinates of the end point of the other one of the estimated road surfaces pass through the predetermined y-coordinate, that is, the tilt and the intercept of the estimated road surface on the V map are changed, whereby the continuousness of the estimated road surfaces in the divisions is ensured. As the predetermined y-coordinate, it is possible to use, for example, the y-coordinate at the center between the y-coordinate of the start point of one of the estimated road surfaces described above and the y-coordinate of the end point of the other one of the estimated road surfaces. By performing the above smoothing processing, an inappropriate estimation result in a certain division may be corrected; thus, there is an advantage of an improvement in the accuracy of road surface estimation.

The output unit 406 is a functional unit that outputs, to the clustering unit 450, a V map and information on an estimated road surface (road surface information) on a V map, on which the smoothing unit 405 has performed smoothing processing. Furthermore, road surface information on a V map is not particularly needed at a subsequent stage (the clustering unit 450, or the like), for example, the road surface information may be stored in the RAM 34, or the like, illustrated in FIG. 3.

Each of the input unit 401, the V-map generating unit 402, the division dividing unit 411, the sample-point retrieving unit 412, the form estimating unit 413, the success-failure determining unit 414, the road-surface selecting unit 415, the smoothing unit 405, and the output unit 406 illustrated in FIG. 7 is implemented when the CPU 32 illustrated in FIG. 3 executes a program (object recognition processing program). Furthermore, all or some of the input unit 401, the V-map generating unit 402, the division dividing unit 411, the sample-point retrieving unit 412, the form estimating unit 413, the success-failure determining unit 414, the road-surface selecting unit 415, the smoothing unit 405, and the output unit 406 may be implemented by the FPGA 31, which is a hardware circuit, or other hardware circuits (ASIC, or the like).

Furthermore, the functions of the input unit 401, the V-map generating unit 402, the division dividing unit 411, the sample-point retrieving unit 412, the form estimating unit 413, the success-failure determining unit 414, the road-surface selecting unit 415, the smoothing unit 405, and the output unit 406 in the road-surface estimating unit 400 are conceptually illustrated in FIG. 7, and this configuration is not a limitation. For example, multiple functional units illustrated as independent functional units in the road-surface estimating unit 400 illustrated in FIG. 7 may be configured as a single functional unit. Conversely, a function provided by a single functional unit in the road-surface estimating unit 400 illustrated in FIG. 7 may be divided into multiple functions and may be configured as multiple functional units.

### Road-surface estimation process of the road-surface estimating unit

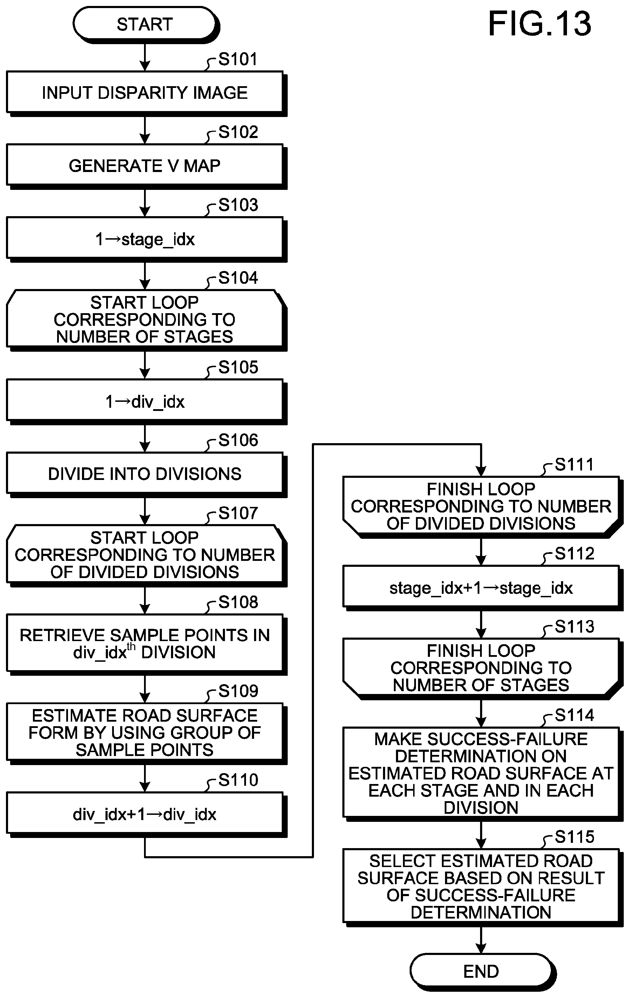

FIG. 13 is a flowchart that illustrates an example of operations of a road-surface estimation process by the road-surface estimating unit according to the first embodiment. With reference to FIG. 13, operations during a road-surface estimation process by the road-surface estimating unit 400 according to the present embodiment are explained.

### Step S101

The input unit 401 takes the input of a disparity image from the disparity calculating unit 300. As for the disparity image, a disparity image generated by the image acquiring units 100a, 100b constituting the stereo camera, the converting units 200a, 200b, and the disparity calculating unit 300 may be directly input, or information may be previously stored in a recording medium, such as CD (compact disk), DVD (digital versatile disk), or HDD (hard disk drive), a network storage, or the like, so that a disparity image is loaded from it and used as needed. Furthermore, only a single image may be input as a disparity image, or moving image data may be sequentially input in each frame. Then, the process proceeds to Step S102.

### Step S102

The V-map generating unit 402 votes for the corresponding disparity point in a V map based on the disparity value of each disparity pixel in the disparity image input from the input unit 401, thereby generating the V map. Then, the process proceeds to Step S103.

### Step S103

The multistage-estimation processing unit 404 initializes the stage-number variable stage_idx, indicating the currently processed stage number, to 1. Then, the process proceeds to Step S104.

### Step S104

The multistage-estimation processing unit 404 repeatedly performs the process from the subsequent Step S105 to S112 by a predetermined number of stages. Then, the process proceeds to Step S105.

### Step S105

The multistage-estimation processing unit 404 initializes a division variable div_idx, indicating the currently processed division at the currently processed stage, to 1. Then, the process proceeds to Step S106.

### Step S106

During the multistage estimation process, the division dividing unit 411 divides a predetermined division into one or more divisions by the number of divisions that corresponds to the current stage indicated by the stage-number variable stage_idx. As described above, the division dividing unit 411 may divide such that each division after being divided has any length. Then, the process proceeds to Step S107.

### Step S107

The multistage-estimation processing unit 404 performs the process from the subsequent Step S108 to S110 on each division divided by the division dividing unit 411. Then, the process proceeds to Step S108.

### Step S108

During the multistage estimation process, the sample-point retrieving unit 412 retrieves and selects at least one or more sample points, representative points, from the disparity points (an example of frequency points) voted for in the div_idx^{th} division at the positions of the respective dp coordinates in the division. Furthermore, the sample-point retrieving unit 412 does not need to retrieve sample points at this timing; as sample points are retrievable in advance in the entire predetermined division, the sample-point retrieving unit 412 may retrieve sample points at the dp coordinates in the entire predetermined division immediately after generation of a V map at for example Step S102. Furthermore, the method for retrieving sample points may be changed for each stage or each division. Then, the process proceeds to Step S109.

### Step S109

During the multistage estimation process, the form estimating unit 413 estimates a road surface form (road surface estimation) in the corresponding division based on a group of sample points retrieved by the sample-point retrieving unit 412 in the div_idx^{th} division. Then, the process proceeds to Step S110.

### Step S110

The multistage-estimation processing unit 404 increments the division variable div_idx, indicating the currently processed division at the currently processed stage, and proceeds to process the next division. Then, the process proceeds to S111.

### Step S111

The multistage-estimation processing unit 404 determines whether the above-described process from Step S108 to S110 has been completed for all the generated divisions at the currently processed stage. When the process has been completed for all the generated divisions, the process proceeds to Step S112, and when the process has not been completed, the process returns to Step S108.

### Step S112

The multistage-estimation processing unit 404 increments the stage-number variable stage_idx, indicating the currently processed stage number, and shifts to a process at the next stage. Then, the process proceeds to Step S113.

### Step S113

The multistage-estimation processing unit 404 determines whether the above-described process from Step S105 to S112 has been completed for all the stages. When the process has been completed for all the stages, the process proceeds to Step S114, and when the process has not been completed, the process returns to Step S105.

### Step S114

During the multistage estimation process, the success-failure determining unit 414 makes a success-failure determination to determine whether an estimated road surface estimated at each stage and in each division by the form estimating unit 413 is appropriate (success). Success-failure determinations for an estimated road surface by the success-failure determining unit 414 may be made not only at this timing but also, for example, after road surface estimation for a division is conducted at Step S109. Then, the process proceeds to Step S115.

### Step S115

The road-surface selecting unit 415 selects the final estimated road surface in the predetermined division from the estimated road surfaces that are determined to be appropriate by the success-failure determining unit 414 during a success-failure determination. Details on the method of selecting the final estimated road surface in the predetermined division are described above. For example, in the case of the number of divisions of 1 (no dividing), when the degree of reliability of an estimated road surface is highest, the predetermined division is roughly estimated by using a single estimated road surface. Furthermore, in the case of the number of divisions **of 3,** when the average value of the degrees of reliability of estimated road surfaces in divisions is higher than the average value of the degrees of reliability calculated at other stages, the predetermined division is estimated by using three estimated road surfaces in a more detailed manner. Then, the road-surface estimating unit 400 completes the road-surface estimation process.

During the above process from Step S101 to S115, the road-surface estimating unit 400 performs a road-surface estimation process.

As described above, according to the present embodiment, a road surface is estimated in a predetermined division on a V map while the number of divisions generated is changed at each of stages, and a success-failure determination is made for each estimated road surface to determine whether it is appropriate so that an estimated road surface in the predetermined division is finally selected. This allows robust road surface form estimation in various situations, for example, when there is a large or small number of disparity points, or when disparity dispersion occurs, and this enables improvements in the accuracy of a road-surface estimation process so as to have robustness to the actual operation.

Furthermore, in explanation according to the present embodiment, the entire V map is a predetermined division (in other words, it may be considered that, according to the present embodiment, a multistage process is applied to a single segment) and the multistage estimation process is performed at multiple stages in the predetermined division without dividing the V map into multiple segments as performed by a segment dividing unit 403 described later according to a second embodiment. However, this is not a limitation, and a V map may be divided into multiple segments and the above-described multistage estimation process may be performed on each segment. Furthermore, in this case, segments include segments to which a multistage estimation process is applied and segments to which it is not applied. For example, a multistage estimation process may be performed on a segment for which the accuracy is regarded as important. Here, while a segment is a unit for estimating a road surface, a division may be regarded as the one for estimating the unit (segment) in a more detailed manner. Therefore, in one possible implementation, a close distance is estimated by using a segment, and a road surface that is difficult to be estimated with segments, such as in a far distance where a small disparity results in a far distance when it is converted into the actual distance, is determined and estimated more precisely in a multistage estimation process. Accordingly, when road surfaces at two or more stages are used, the segment may be redefined as a new segment indicated by each division (for example, when two divisions become a new segment and there are originally eight segments, the number of segments after the multistage estimation process is 9).

### Second embodiment

An object recognition device according to the second embodiment is explained primarily on the aspect different from the object recognition device 1 according to the first embodiment. In explanation according to the first embodiment, while the number of divisions generated is changed at each of stages, a road surface is estimated in a predetermined division of the V map, a success-failure determination is made to determine whether each estimated road surface is appropriate, and the estimated road surface in the predetermined division is finally selected. In explanation according to the present embodiment, a V map is divided into segments, two or more successive segments are regarded as a predetermined division, and a multistage estimation process is sequentially performed by overlapping segments. According to the second embodiment, explanation is premised on segment dividing; however, as in the first embodiment, the whole division of the V map may be regarded as a single segment and may be processed such that multiple divisions are overlapped.

The hardware configuration and the functional block configuration of the object recognition device according to the present embodiment are the same as the configurations explained in the first embodiment.

### Configuration and operation of functional blocks of a road-surface estimating unit

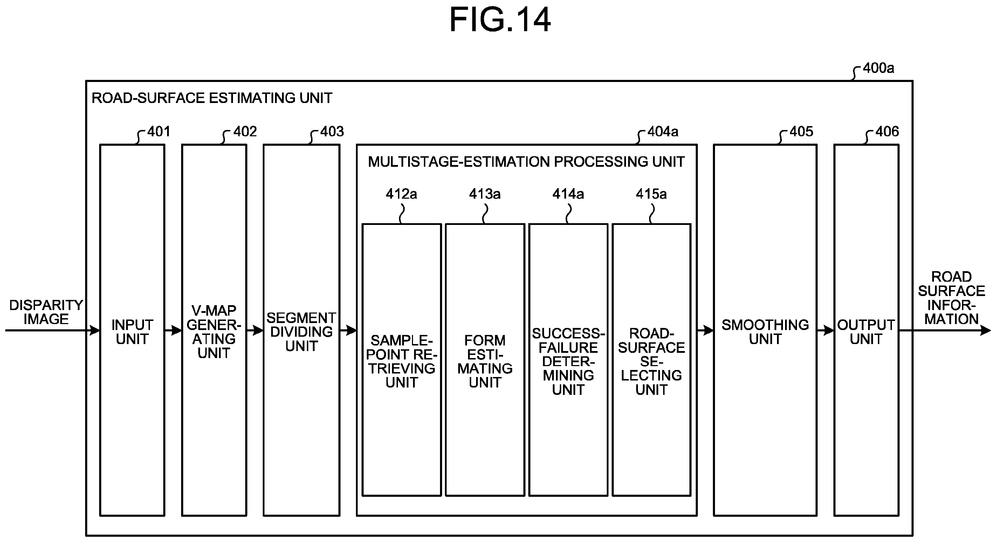

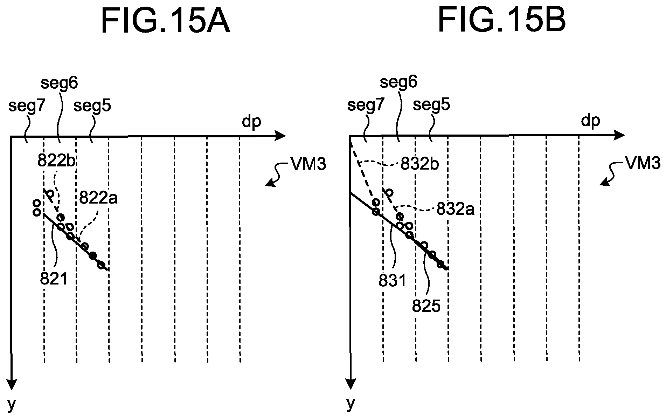

FIG. 14 is a diagram that illustrates an example of the configuration of functional blocks of a road-surface estimating unit in the object recognition device according to the second embodiment. FIG. 15 is a diagram that illustrates an example of a multistage estimation process by the road-surface estimating unit according to the second embodiment. With reference to FIGS. 14 and 15, the specific configuration and operation of functional blocks of a road-surface estimating unit 400a according to the present embodiment are explained.

As illustrated in FIG. 14, the road-surface estimating unit 400a includes the input unit 401, the V-map generating unit 402 (first generating unit), the segment dividing unit 403 (dividing unit), a multistage-estimation processing unit 404a, the smoothing unit 405 (correcting unit), and the output unit 406. The functions of the input unit 401, the V-map generating unit 402, the smoothing unit 405, and the output unit 406 are the same as the functions explained in the first embodiment.

The segment dividing unit 403 is a functional unit that divides a V map, generated by the V-map generating unit 402, into two or more segments in the dp direction (horizontal direction). According to the present embodiment, the multistage estimation process described later is performed by using segments as the minimum unit. Furthermore, when a multistage estimation process is sequentially performed on each predetermined division by overlapping segments as described later, a V map needs to be practically divided into three or more segments. Moreover, the width of all the divided segments may be the same or may be determined in accordance with a distance. For example, for high-accuracy road surface estimation in a far distance, segments for a close distance may be divided roughly (a wide width), and segments for a far distance may be divided precisely (a narrow width).

In the example illustrated in FIGS. 15A and 15B, the segment dividing unit 403 divides a V map VM3 into seven segments. For the explanation below, three segments having the smaller disparity values dp are a seventh segment seg7, a sixth segment seg6, and a fifth segment seg5.

Furthermore, as described later, during a multistage estimation process, a sample-point retrieving unit 412a retrieves sample points from disparity points at the respective dp coordinates in the V map.

The multistage-estimation processing unit 404a is a functional unit that, with regard to a V map divided into multiple segments, sequentially performs a multistage estimation process on each predetermined division by regarding two or more successive segments as a predetermined division and overlapping the segments from a close distance to a far distance. Here, the reason of processing from a close distance to a far distance is that, as the size of a road surface included in a disparity image for a close distance is larger, a large number of disparity points regarding the road surface are voted for in the V map and, as a result, a road surface form may be estimated with accuracy. As illustrated in FIG. 14, the multistage-estimation processing unit 404a includes the sample-point retrieving unit 412a (retrieving unit), a form estimating unit 413a (estimating unit), a success-failure determining unit 414a (determining unit), and a road-surface selecting unit 415a (selecting unit).

The sample-point retrieving unit 412a is a functional unit that, during a multistage estimation process, retrieves and selects at least one or more sample points, representative points, from disparity points (an example of frequency points) voted for in a V map at the positions of the respective dp coordinates in the entire area of the V map in the dp direction. Furthermore, the sample-point retrieving unit 412a may use the same sample-point retrieving method as that for the sample-point retrieving unit 412 according to the first embodiment, and inappropriate sample points may be removed from retrieved sample points.

Then, as described later, during a multistage estimation process, the form estimating unit 413a estimates a road surface based on a group of sample points retrieved.

The form estimating unit 413a is a functional unit that, during a multistage estimation process, estimates a road surface form (road surface estimation) in each division (made up of one or more segments in this case) of a predetermined division made up of multiple segments based on a group of sample points retrieved by the sample-point retrieving unit 412a. In explanation, the method of estimating a road surface is the same as the method of estimating a road surface by the form estimating unit 413 according to the first embodiment, and a linear approximation is applied to road surface estimation if not otherwise specified.

The example in FIG. 15A illustrates a case where a multistage estimation process (the number of stages is two) is performed on a predetermined division that is the fifth segment seg5 and the sixth segment seg6. At the first stage where the number of divisions is one, the form estimating unit 413a obtains an estimated road surface 821 as an estimated road surface for the predetermined division (the fifth segment seg5 and the sixth segment seg6) by using a group of sample points retrieved by the sample-point retrieving unit 412a. Furthermore, at the second stage where the number of divisions is two, the form estimating unit 413a obtains, beginning with the one in a close distance, estimated road surfaces 822a, 822b in two segments.

The example of FIG. 15B illustrates a case where a multistage estimation process (the number of stages is two) is performed on a predetermined division that is the sixth segment seg6 and the seventh segment seg7. The sixth segment seg6 and the seventh segment seg7, which are the predetermined division illustrated in FIG. 15B, are overlapped, at the sixth segment seg6, with the fifth segment seg5 and the sixth segment seg6, which are the predetermined division illustrated in FIG. 15A. At the first stage where the number of divisions is one, the form estimating unit 413a obtains an estimated road surface 831 as an estimated road surface for the predetermined division (the sixth segment seg6 and the seventh segment seg7) by using a group of sample points retrieved by the sample-point retrieving unit 412a. Furthermore, the form estimating unit 413a obtains, beginning with the one in a close distance, estimated road surfaces 832a, 832b in two segments at the second stage where the number of divisions is two.

Furthermore, the form estimating unit 413a calculates the degree of reliability of an estimated road surface estimated at each stage and in each division, used for a success-failure determination on an estimated road surface by for example the success-failure determining unit 414a. For example, when a linear approximation is applied by using a least-square method to estimate a road surface at each stage and in each division, the form estimating unit 413a may calculate a coefficient of correlation as the degree of reliability of the estimated road surface. Furthermore, the method of calculating the degree of reliability is not limited to the above-described method, and any method is applicable as long as the method enables quantification of the degree of reliability of an estimated road surface.

Then, as described later, during a multistage estimation process, the success-failure determining unit 414a makes a success-failure determination to determine whether an estimated road surface estimated at each stage and in each division by the form estimating unit 413a is appropriate.

The success-failure determining unit 414a is a functional unit that, during a multistage estimation process, makes a success-failure determination to determine whether an estimated road surface estimated at each stage and in each division by the form estimating unit 413a is appropriate (success). Furthermore, the success-failure determining unit 414a may determine whether an estimated road surface is appropriate based on the degree of reliability of the estimated road surface at each stage and in each division, calculated by for example the form estimating unit 413a.

In the example illustrated in FIG. 15A, the success-failure determining unit 414a makes a success-failure determination for the estimated road surface 821 that is estimated at the first stage where the number of divisions is one and makes a success-failure determination on the estimated road surfaces 822a, 822b estimated at the second stage where the number of divisions is two. In the example illustrated in FIG. 15B, the success-failure determining unit 414a makes a success-failure determination for the estimated road surface 831 estimated at the first stage where the number of divisions is one and makes a success-failure determination for the estimated road surfaces 832a, 832b estimated at the second stage where the number of divisions is two.

Furthermore, as described later, during a multistage estimation process, the road-surface selecting unit 415a selects the final estimated road surface in the predetermined division from estimated road surfaces that are determined to be appropriate during a success-failure determination by the success-failure determining unit 414a.

Although the form estimating unit 413a calculates the degree of reliability of an estimated road surface estimated at each stage and in each division, this is not a limitation, and the success-failure determining unit 414a may calculate the degree of reliability.

The road-surface selecting unit 415a is a functional unit that selects the final estimated road surface in a predetermined division from the estimated road surfaces that are determined to be appropriate during a success-failure determination by the success-failure determining unit 414a. For example, the road-surface selecting unit 415a selects, in a specific predetermined division, the estimated road surface at the stage with the highest degree of reliability among the degrees of reliability of the estimated road surfaces at respective stages as the final estimated road surface in the predetermined division.

In the example illustrated in FIG. 15A, the road-surface selecting unit 415a compares the degree of reliability of the estimated road surface 821 estimated at the first stage and the average values of the degrees of reliability of the estimated road surfaces 822a, 822b estimated at the second stage in for example a predetermined division made up of the fifth segment seg5 and the sixth segment seg6 and selects the estimated road surface at the stage with the higher degree of reliability as the final estimated road surface in the predetermined division. In the example illustrated in FIG. 15B, the road-surface selecting unit 415a compares the degree of reliability of the estimated road surface 831 estimated at the first stage and the average value of the degrees of reliability of the estimated road surfaces 832a, 832b estimated at the second stage in for example the predetermined division made up of the sixth segment seg6 and the seventh segment seg7 and selects the estimated road surface at the stage with the higher degree of reliability as the final estimated road surface in the predetermined division.

Here, for example, individually processing segments may make it difficult to accurately estimate the road surface form in each segment due to a small number of disparity points in a segment, a high disparity dispersion, or inclusion of a large number of disparity points of an object. Furthermore, a process to make estimation for a segment based on an estimation result of the previous segment may cause the subsequent segment, which is supposed to be a success, to be determined to be a failure during a success-failure determination due to the adverse effect of an inappropriate estimation result.

As described above, according to the present embodiment, from a close distance to a far distance, each predetermined division is overlapped in units of segments while a multistage estimation process is sequentially performed on each predetermined division. In the example of FIGS. 15A and 15B, the sixth segment seg6 is an overlapped segment. First, in FIG. 15A, as described above, a multistage estimation process is performed on a predetermined division that is the fifth segment seg5 and the sixth segment seg6. As a result, as illustrated in FIG. 15A, instead of the inappropriately raised estimated road surface 822b in the sixth segment seg6, the estimated road surface 821 is adopted, which is estimated in the single division that is the fifth segment seg5 and the sixth segment seg6. Then, as illustrated in FIG. 15B, a multistage estimation process is performed on a predetermined division that is the sixth segment seg6 and the seventh segment seg7. As a result, as illustrated in FIG. 15B, in the segments, at least any one of the estimated road surface 832a and the estimated road surface 832b is determined to be inappropriate due to the disparity of an object, an insufficient number of disparity points of a road surface, or the like, and the estimated road surface 831 is adopted, which is estimated in the single division that is the sixth segment seg6 and the seventh segment seg7. Here, an estimated road surface 825 is an estimated road surface in the fifth segment seg5, which is estimated (selected) during a multistage estimation process when the fifth segment seg5 and the sixth segment seg6 are a predetermined division. Here, in the multistage estimation process illustrated in FIG. 15A and the multistage estimation process illustrated in FIG. 15B, the sixth segment seg6 is overlapped, and therefore there are two estimated road surfaces that are selected for the sixth segment seg6. In this case, for example, the average of the two estimated road surfaces is selected as the final estimated road surface of the sixth segment seg6. As described above, a multistage estimation process is sequentially performed on each predetermined division by overlapping segments from a close distance to a far distance; thus, an estimation process is performed at multiple stages by using a larger number of disparity points, and road surface estimation with robustness to noise and detailed forms in accordance with disparity distribution conditions are achieved.

In the example of FIGS. 15A and 15B, a single segment is overlapped for two segments; however, this is not a limitation, and any number of segments may be overlapped and any number of segments may be included in a predetermined division. For example, in one possible way, three segments are included in a predetermined division, and two segments are overlapped.

Furthermore, with regard to an overlapped segment, two or more estimated road surfaces are estimated (selected), and for example the average of two or more estimated road surfaces may be selected as the final estimated road surface for the overlapped segment. Furthermore, the average obtained after applying a weight in accordance with the degree of reliability during a success-failure determination may be selected as the final estimated road surface for the overlapped segment. Moreover, the estimated road surface that is less discontinuous in terms of the continuousness between estimated road surfaces of the segments located at both ends of the overlapped segment **(e.g.,** the estimated road surface that has the minimum sum of differences at the y-coordinate at two edges of the overlapped segment) or the line connecting the end point and the start point of the segments at two ends when the estimated road surface of the overlapped segment is discarded may be selected as the final estimated road surface for the overlapped segment.

Each of the input unit 401, the V-map generating unit 402, the segment dividing unit 403, the sample-point retrieving unit 412a, the form estimating unit 413a, the success-failure determining unit 414a, the road-surface selecting unit 415a, the smoothing unit 405, and the output unit 406 illustrated in FIG. 14 are implemented when the CPU 32 illustrated in FIG. 3 executes a program (object recognition processing program). Furthermore, all or some of the input unit 401, the V-map generating unit 402, the segment dividing unit 403, the sample-point retrieving unit 412a, the form estimating unit 413a, the success-failure determining unit 414a, the road-surface selecting unit 415a, the smoothing unit 405, and the output unit 406 may be implemented by using the FPGA 31, which is a hardware circuit, or other hardware circuits (ASIC, or the like).

Furthermore, the functions of the input unit 401, the **V-**map generating unit 402, the segment dividing unit 403, the sample-point retrieving unit 412a, the form estimating unit 413a, the success-failure determining unit 414a, the road-surface selecting unit 415a, the smoothing unit 405, and the output unit 406 in the road-surface estimating unit 400a are conceptually illustrated in FIG. 14, and this configuration is not a limitation. For example, multiple functional units illustrated as independent functional units in the road-surface estimating unit 400a illustrated in FIG. 14 may be configured as a single functional unit. Conversely, a function provided by a single functional unit in the road-surface estimating unit 400a illustrated in FIG. 14 may be divided into multiple functions and may be configured as multiple functional units.

### Road-surface estimation process of the road-surface estimating unit

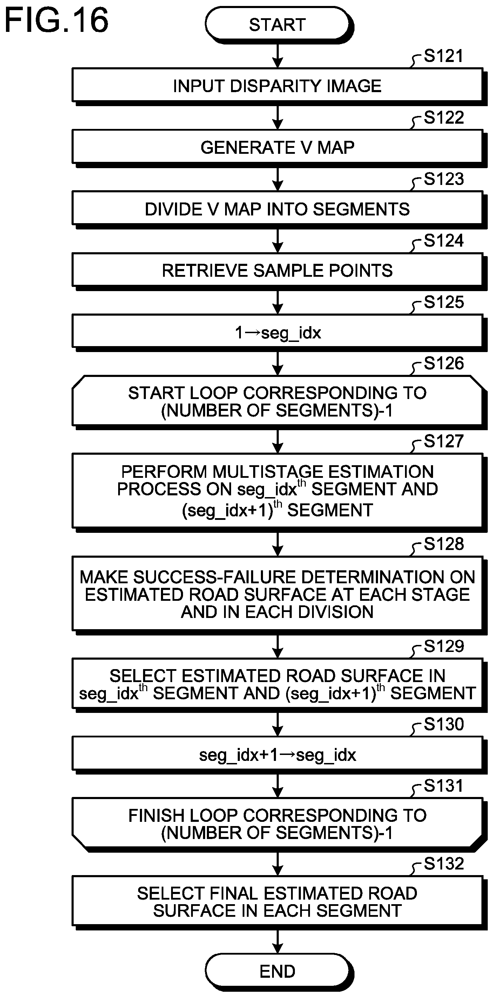

FIG. 16 is a flowchart that illustrates an example of operations of the road-surface estimation process by the road-surface estimating unit according to the second embodiment. With reference to FIG. 16, operations of the road-surface estimation process by the road-surface estimating unit 400a according to the present embodiment are explained. FIG. 16 is explained by using the configuration illustrated in FIG. 15, i.e., the configuration in which a V map is divided into seven segments, two segments are a predetermined division, and a single segment is overlapped.

### Step S121

The input unit 401 takes the input of a disparity image from the disparity calculating unit 300. Then, the process proceeds to Step S122.

### Step S122

The V-map generating unit 402 votes for the corresponding disparity point in a V map based on the disparity value of each disparity pixel in the disparity image input from the input unit 401, thereby generating the V map. Then, the process proceeds to Step S123.

### Step S123

The segment dividing unit 403 divides the V map, generated by the V-map generating unit 402, into two or more segments in the dp direction (horizontal direction). Then, the process proceeds to Step S124.

### Step S124

During the multistage estimation process, the sample-point retrieving unit 412a retrieves and selects at least one or more sample points, representative points, from the disparity points (an example of frequency points) voted for in the V map at the positions of the respective dp coordinates of the entire area of the V map in the dp direction. Then, the process proceeds to Step S125.

### Step S125

The multistage-estimation processing unit 404a initializes the segment variable seg_idx, indicating the very front segment included in the currently processed predetermined division, to 1. Then, the process proceeds to Step S126.

### Step S126

The multistage-estimation processing unit 404a repeatedly performs the subsequent process from Step S127 to S130 by the number of times corresponding to (the number of segments divided by the segment dividing unit 403)-1. Then, the process proceeds to Step S127.

### Step S127

The form estimating unit 413a performs a multistage estimation process on the predetermined division made up of the seg_idx^{th} segment and the (seg_idx+1)^{th} segment. Specifically, the form estimating unit 413a estimates a road surface form (road surface estimation) in each division (the division of the seg_idx^{th} segment, the division of the seg_idx+1^{th} segment, and the division of the seg_idx^{th} segment together with the (seg_idx+1)^{th} segment) of the above-described predetermined division made up of the two segments based on a group of sample points retrieved by the sample-point retrieving unit 412a. Then, the process proceeds to Step S128.

### Step S128

The success-failure determining unit 414a makes a success-failure determination to determine whether the estimated road surface estimated at each stage and in each division by the form estimating unit 413a is appropriate (success). Then, the process proceeds to Step S129.

### Step S129

The road-surface selecting unit 415a selects an estimated road surface in the predetermined division (the seg_idx^{th} segment and the (seg_idx+1)^{th} segment) from the estimated road surfaces that are determined to be appropriate by the success-failure determining unit 414a during a success-failure determination. Then, the process proceeds to Step S130.

### Step S130

The multistage-estimation processing unit 404a increments the segment variable seg_idx, indicating the very front segment included in the currently processed predetermined division, and proceeds to process the subsequent predetermined division. Then, the process proceeds to Step S131.

### Step S131

The multistage-estimation processing unit 404a determines whether the above-described process from Step S127 to S130 has been completed for all the predetermined divisions (the predetermined divisions corresponding to (the number of segments-1)). When it is determined that the process has been completed for all the predetermined divisions, the process proceeds to Step S132, and when it is determined that the process has not been completed, the process returns to Step S127.

### Step S132

The road-surface selecting unit 415a selects the final estimated road surface in each segment of the V map from the estimated road surfaces that are determined to be appropriate by the success-failure determining unit 414a during a success-failure determination. The method of selecting the final estimated road surface is described above. Then, the road-surface estimating unit 400a terminates the road-surface estimation process.

During the above-described process from Step S121 to S132, the road-surface estimating unit 400a performs the road-surface estimation process.

As described above, according to the present embodiment, a V map is divided into segments, two or more successive segments are regarded as a predetermined division, and a multistage estimation process is sequentially performed by overlapping segments from a close distance to a far distance. As a multistage estimation process is thus sequentially performed on each predetermined division while segments are overlapped from a close distance to a far distance, an estimation process is performed at multiple stages by using a larger number of disparity points; thus, road surface estimation with robustness to noise and detailed forms in accordance with disparity distribution conditions is achieved, and the accuracy of a road-surface estimation process may be improved so as to have robustness to the actual operation.

### Third embodiment

An object recognition device according to a third embodiment is explained primarily on the aspect different from the object recognition device according to the second embodiment. In explanation according to the second embodiment, a V map is divided into segments, two or more successive segments are regarded as a predetermined division, and a multistage estimation process is sequentially performed by overlapping segments. In the present embodiment, an explanation is given of the process that is the combination of the road-surface estimation process according to the second embodiment and the road-surface estimation process according to the first embodiment. In the third embodiment, an explanation is premised on segment dividing; however, as in the first embodiment, the whole division of the V map may be regarded as a single segment and may be processed such that multiple divisions are overlapped.

The hardware configuration and the functional block configuration of the object recognition device according to the present embodiment are the same as the configurations explained in the first embodiment.

### Configuration and operation of functional blocks of a road-surface estimating unit

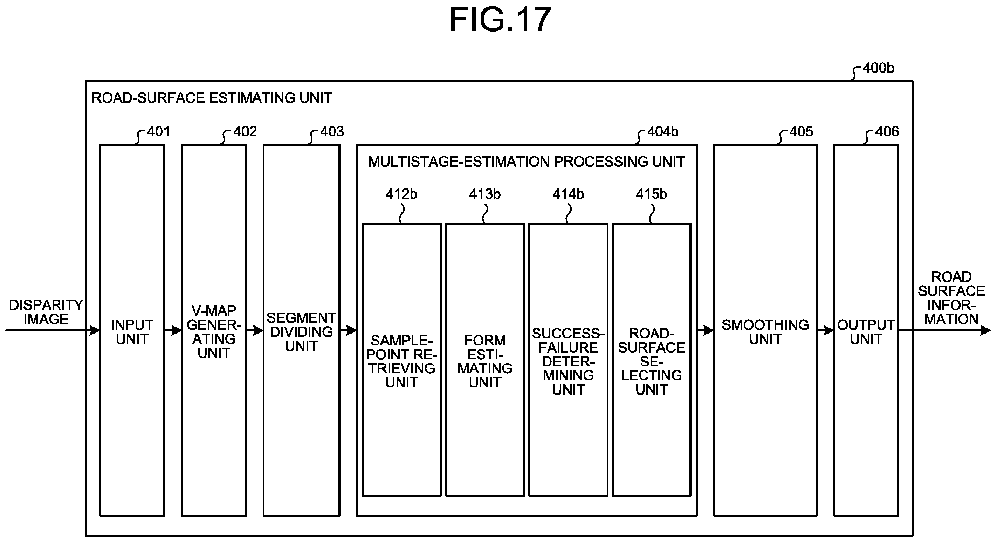

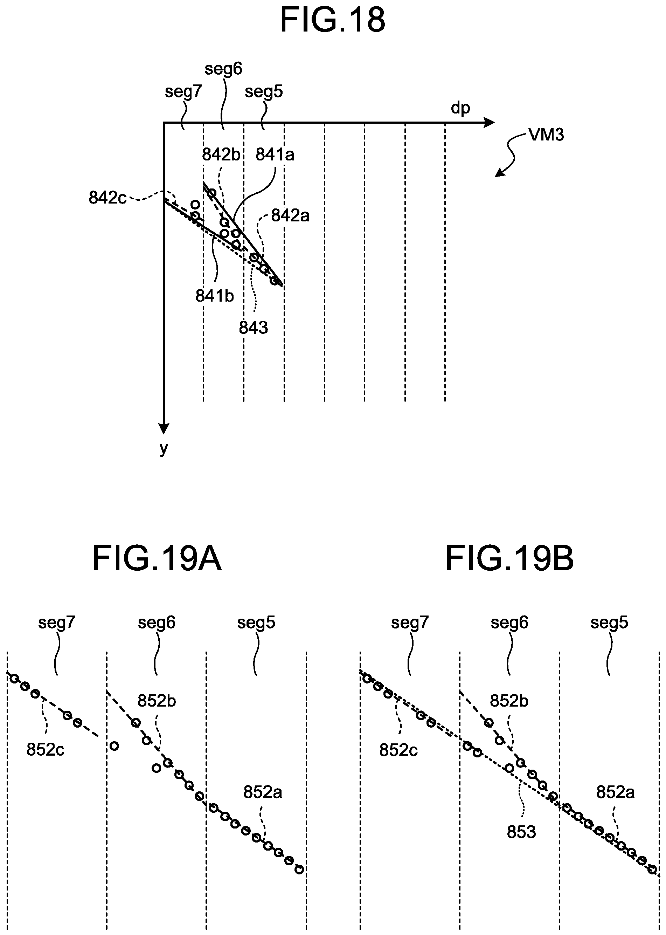

FIG. 17 is a diagram that illustrates an example of the configuration of functional blocks of a road-surface estimating unit in the object recognition device according to the third embodiment. FIG. 18 is a diagram that illustrates an example of a multistage estimation process by the road-surface estimating unit according to the third embodiment. FIGS. 19A and 19B are diagrams that illustrate the advantage of the combination of the multistage estimation processes according to the first embodiment and the second embodiment. With reference to FIGS. 17 to 19B, the specific configuration and operation of functional blocks of a road-surface estimating unit 400b according to the present embodiment are explained.

As illustrated in FIG. 17, the road-surface estimating unit 400b includes the input unit 401, the V-map generating unit 402 (first generating unit), the segment dividing unit 403 (dividing unit), a multistage-estimation processing unit 404b, the smoothing unit 405 (correcting unit), and the output unit 406. The functions of the input unit 401, the V-map generating unit 402, the segment dividing unit 403, the smoothing unit 405, and the output unit 406 are the same as the functions explained in the second embodiment.

Furthermore, in the example illustrated in FIG. 18, the segment dividing unit 403 divides the V map VM3 into seven segments. For the explanation below, three segments having the smaller disparity values dp are the seventh segment seg7, the sixth segment seg6, and the fifth segment seg5.

The multistage-estimation processing unit 404b is a functional unit that performs the process that is the combination of the multistage estimation process according to the first embodiment and the multistage estimation process according to the second embodiment. Specifically, with regard to a V map divided into multiple segments, the multistage-estimation processing unit 404b regards two or more successive segments as a predetermined division, sequentially performs a multistage estimation process on each predetermined division by overlapping the segments from a close distance to a far distance, and finally estimates a road surface in a division (hereafter, sometimes referred to as "the whole division") including each predetermined division on which the multistage estimation process has been performed. As illustrated in FIG. 17, the multistage-estimation processing unit 404b includes a sample-point retrieving unit 412b (retrieving unit), a form estimating unit 413b (estimating unit), a success-failure determining unit 414b (determining unit), and a road-surface selecting unit 415b (selecting unit).

The sample-point retrieving unit 412b is a functional unit that, during a multistage estimation process, retrieves and selects at least one or more sample points, representative points, from disparity points (an example of frequency points) voted for in a V map at the positions of the respective dp coordinates in the entire area of the V map in the dp direction. Furthermore, the sample-point retrieving unit 412b may use the same sample-point retrieving method as that for the sample-point retrieving unit 412 according to the first embodiment, and inappropriate sample points may be removed from retrieved sample points.

Then, as described later, during a multistage estimation process, the form estimating unit 413b estimates a road surface based on a group of sample points retrieved.

The form estimating unit 413b is a functional unit that, during a multistage estimation process, estimates a road surface form (road surface estimation) in each division (made up of one or more segments in this case) of a predetermined division made up of multiple segments based on a group of sample points retrieved by the sample-point retrieving unit 412b. The form estimating unit 413b further estimates a road surface in the whole division including each predetermined division on which the multistage estimation process has been performed. The method of estimating a road surface is the same as the method of estimating a road surface by the form estimating unit 413 according to the first embodiment, and a linear approximation is applied to road surface estimation if not otherwise specified.

In the example illustrated in FIG. 18, first, the form estimating unit 413b performs a multistage estimation process (the number of stages is two) on a predetermined division that is the fifth segment seg5 and the sixth segment seg6. At the first stage where the number of divisions is one, the form estimating unit 413b obtains an estimated road surface 841a as an estimated road surface for the predetermined division (the fifth segment seg5 and the sixth segment seg6) by using a group of sample points retrieved by the sample-point retrieving unit 412b. Furthermore, at the second stage where the number of divisions is two, the form estimating unit 413b obtains, beginning with the one in a close distance, estimated road surfaces 842a, 842b in two segments.

Then, the form estimating unit 413b performs a multistage estimation process (the number of stages is two) on a predetermined division that is the sixth segment seg6 and the seventh segment seg7. The sixth segment seg6 and the seventh segment seg7, which are the predetermined division illustrated in FIG. 18, are overlapped, at the sixth segment seg6, with the fifth segment seg5 and the sixth segment seg6, which are a different predetermined division. At the first stage where the number of divisions is one, the form estimating unit 413b obtains an estimated road surface 841b as an estimated road surface for the predetermined division (the sixth segment seg6 and the seventh segment seg7) by using a group of sample points retrieved by the sample-point retrieving unit 412b. Furthermore, the form estimating unit 413b obtains, beginning with the one in a close distance, estimated road surfaces 842b, 842c in two segments at the second stage where the number of divisions is two.

Furthermore, the form estimating unit 413b estimates a road surface in the whole division (the fifth segment seg5, the sixth segment seg6, and the seventh segment seg7) including each predetermined division that has undergone a multistage estimation process, and obtains an estimated road surface 843. Furthermore, the form estimating unit 413b may estimate a road surface in the whole division by using sample points that are retrieved by the sample-point retrieving unit 412b using a method different from that for sample points used to estimate a road surface at each stage and in each division in the predetermined division during the above-described multistage estimation process.

Furthermore, the form estimating unit 413b calculates the degree of reliability of an estimated road surface estimated at each stage, in each division, and in the whole division, used for a success-failure determination on an estimated road surface by for example the success-failure determining unit 414b. For example, when a linear approximation is applied by using a least-square method to estimate a road surface at each stage, in each division, and in the whole division, the form estimating unit 413b may calculate a coefficient of correlation as the degree of reliability of the estimated road surface. Furthermore, the method of calculating the degree of reliability is not limited to the above-described method, and any method is applicable as long as the method enables quantification of the degree of reliability of an estimated road surface.

Then, as described later, during a multistage estimation process, the success-failure determining unit 414b makes a success-failure determination to determine whether an estimated road surface estimated at each stage, in each division, and in the whole division by the form estimating unit 413b is appropriate.

The success-failure determining unit 414b is a functional unit that, during a multistage estimation process, makes a success-failure determination to determine whether an estimated road surface estimated at each stage, in each division, and in the whole division by the form estimating unit 413b is appropriate (success). Furthermore, the success-failure determining unit 414b may determine whether an estimated road surface is appropriate based on the degree of reliability of the estimated road surface at each stage, in each division, and in the whole division calculated by for example the form estimating unit 413b.

In the example illustrated in FIG. 18, the success-failure determining unit 414b makes a success-failure determination on the estimated road surfaces 841a, 841b in the respective predetermined divisions and the estimated road surfaces 842a to 842c in the respective segments. Furthermore, the success-failure determining unit 414b makes a success-failure determination on the estimated road surface 843 in the whole division.

Furthermore, the success-failure determining unit 414b may make a success-failure determination for an estimated road surface in the whole division by using a parameter different from the parameter used for a success-failure determination on an estimated road surface at each stage and in each division in each predetermined division during the above-described multistage estimation process.

The road-surface selecting unit 415b is a functional unit that selects the final estimated road surface from estimated road surfaces that are determined to be appropriate during a success-failure determination by the success-failure determining unit 414b.

Specifically, the road-surface selecting unit 415b selects, in a specific predetermined division, the estimated road surface at the stage with the highest degree of reliability among the degrees of reliability of the estimated road surfaces at respective stages as the estimated road surface in the predetermined division. Here, when a division (segment) is overlapped with regard to the selected estimated road surface in each predetermined division, the average of the two estimated road surfaces may be the final estimated road surface in the overlapped division (segment) in the same manner as, for example, the above-described second embodiment.

During a success-failure determination by the success-failure determining unit 414b, in some cases, it is determined that an estimated road surface at each stage in each predetermined division is not appropriate and it is difficult to select the final estimated road surface in the predetermined division. For example, in the example illustrated in FIG. 19A, when a raising road surface (an estimated road surface 852b) is estimated in the sixth segment seg6 due to the effect of the disparity of an object, or the like, although an estimated road surface 852a in the fifth segment seg5 is determined to be appropriate, there is a possibility that an estimated road surface 852c in the seventh segment seg7 is determined to be inappropriate during a success-failure determination. Furthermore, there is a possibility that the estimated road surface in the predetermined division made up of the fifth segment seg5 and the sixth segment seg6 is estimated as a raising road surface, and the estimated road surface in the predetermined division made up of the sixth segment seg6 and the seventh segment seg7 is determined to be inappropriate due to an insufficient number of points. Even under such a condition, as illustrated in FIG. 19B, a road surface (an estimated road surface 853) estimated in the whole segments (the whole division) is likely to be determined to be an appropriate road surface as there is a sufficient number of disparity points in the fifth segment seg5. Although subdividing segments usually makes it possible to understand a complicated road surface form, it may result in failed estimation due to an insufficient number of points depending on the number of segments to be divided and the disparity distribution, as described above.

Therefore, the road surface in the division (the whole division) combining all the segments is also included in the selection candidates for an estimation process; thus, it is possible to solve the above problem so as to estimate a proper road surface form. Hence, in this case, when the success-failure determining unit 414b determines that the estimated road surface in the whole division is appropriate, the road-surface selecting unit 415b selects the estimated road surface as the final estimated road surface in the whole division.

As for the procedure to select an estimated road surface, there is a technique to select, as the final estimated road surface, the road surface estimated in the whole division including each predetermined division when there is an estimated road surface that is determined to be inappropriate (determined to be a failure) among the estimated road surfaces estimated at each stage and in each division in each predetermined division on which a multistage estimation process has been performed. In this case, the road surface estimated in the whole division needs to be determined to be appropriate. Furthermore, in the example illustrated in FIG. 18, it is possible to use a method in which, as there are three estimated road surfaces with regard to each of the fifth segment seg5 and the seventh segment seg7, and there are four estimated road surfaces with regard to the sixth segment seg6, the average road surface (the average tilt and intercept) of the estimated road surfaces or the road surface with the highest degree of reliability among the estimated road surfaces that are determined to be appropriate is selected as the final estimated road surface. In this way, it is possible to adopt any method for selecting the final estimated road surface from estimated road surfaces that are estimated at each stage, in each division, and in the whole division.

Furthermore, in the example of FIG. 18 and FIGS. 19A, 19B, although the whole division is the three segments in explanation, four or more segments may be processed as the whole division. Furthermore, in this case, the road surface of one segment, the road surface of two segments all together (segments are overlapped), the road surface of three segments all together (segments are overlapped), and the road surface of four segments all together are estimated, and in the same procedure as that described above, the final estimated road surface may be selected. That is, the number of segments included in the whole division and the number of stages for a multistage estimation process may be optionally set.

Each of the input unit 401, the V-map generating unit 402, the segment dividing unit 403, the sample-point retrieving unit 412b, the form estimating unit 413b, the success-failure determining unit 414b, the road-surface selecting unit 415b, the smoothing unit 405, and the output unit 406 illustrated in FIG. 17 is implemented when the CPU 32 illustrated in FIG. 3 executes a program (object recognition processing program). Furthermore, all or some of the input unit 401, the V-map generating unit 402, the segment dividing unit 403, the sample-point retrieving unit 412b, the form estimating unit 413b, the success-failure determining unit 414b, the road-surface selecting unit 415b, the smoothing unit 405, and the output unit 406 may be implemented by using the FPGA 31, which is a hardware circuit, or other hardware circuits (ASIC, or the like).

The functions of the input unit 401, the V-map generating unit 402, the segment dividing unit 403, the sample-point retrieving unit 412b, the form estimating unit 413b, the success-failure determining unit 414b, the road-surface selecting unit 415b, the smoothing unit 405 and the output unit 406 in the road-surface estimating unit 400b are conceptually illustrated in FIG. 17, and this configuration is not a limitation. For example, multiple functional units illustrated as independent functional units in the road-surface estimating unit 400b illustrated in FIG. 17 may be configured as a single functional unit. Conversely, a function provided by a single functional unit in the road-surface estimating unit 400b illustrated in FIG. 17 may be divided into multiple functions and may be configured as multiple functional units.

### Road-surface estimation process of the road-surface estimating unit

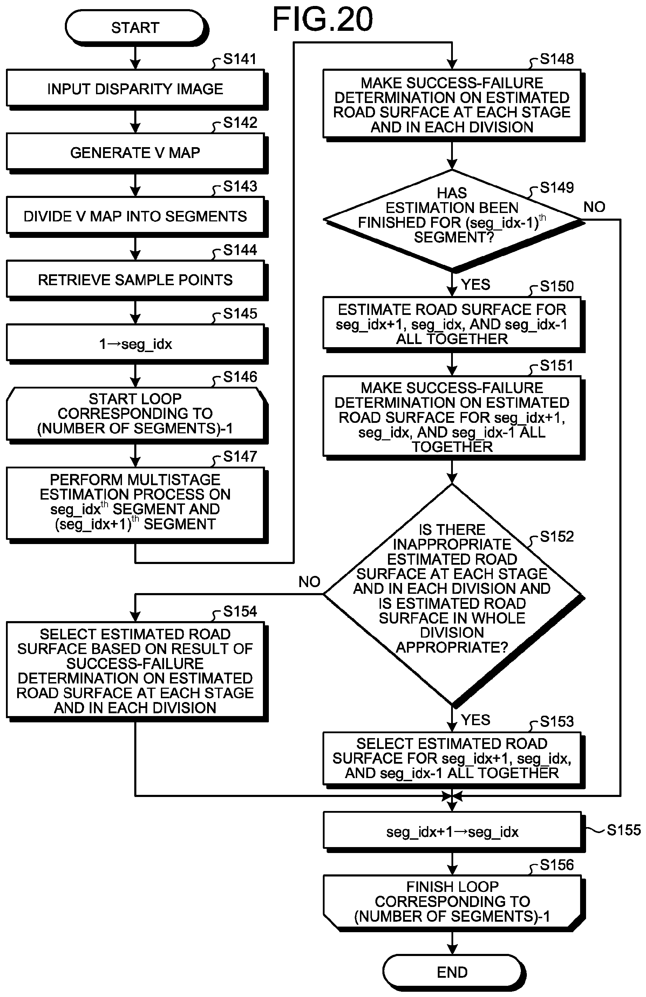

FIG. 20 is a flowchart that illustrates an example of operations of a road-surface estimation process by the road-surface estimating unit according to the third embodiment. With reference to FIG. 20, operations during a road-surface estimation process by the road-surface estimating unit 400b according to the present embodiment are explained. FIG. 20 is explained by using the configuration illustrated in FIGS. 18, 19A and 19B, i.e., the configuration in which two segments are a predetermined division and a single segment is overlapped, and an explanation is given of the processing details with regard to the fifth segment seg5 to the seventh segment seg7 illustrated in FIGS. 18, 19A and 19B (the first segment to the third segment in the flowchart of FIG. 20).

### Step S141

The input unit 401 takes the input of a disparity image from the disparity calculating unit 300. Then, the process proceeds to Step S142.

### Step S142

The V-map generating unit 402 votes for the corresponding disparity point in a V map based on the disparity value of each disparity pixel in the disparity image input from the input unit 401, thereby generating the V map. Then, the process proceeds to Step S143.

### Step S143

The segment dividing unit 403 divides the V map, generated by the V-map generating unit 402, into two or more segments in the dp direction (horizontal direction). Then, the process proceeds to Step S144.

### Step S144

During the multistage estimation process, the sample-point retrieving unit 412b retrieves and selects at least one or more sample points, representative points, from the disparity points (an example of frequency points) voted for in the V map at the positions of the respective dp coordinates of the entire area of the V map in the dp direction. Then, the process proceeds to Step S145.

### Step S145

The multistage-estimation processing unit 404b initializes the segment variable seg_idx, indicating the very front segment included in the currently processed predetermined division, to 1. Then, the process proceeds to Step S146.

### Step S146

The multistage-estimation processing unit 404b repeatedly performs the subsequent process from Step S147 to S155 by the number of times corresponding to (the number of segments divided by the segment dividing unit 403)-1. Then, the process proceeds to Step S147.

### Step S147

The form estimating unit 413b performs a multistage estimation process on the predetermined division made up of the seg_idx^{th} segment and the (seg_idx+1)^{th} segment. Specifically, the form estimating unit 413b estimates a road surface form (road surface estimation) in each division (the division of the seg_idx^{th} segment, the division of the seg_idx+1^{th} segment, and the division of the seg_idx^{th} segment together with the (seg_idx+1)^{th} segment) of the above-described predetermined division made up of the two segments based on a group of sample points retrieved by the sample-point retrieving unit 412b. Then, the process proceeds to Step S148.

### Step S148

The success-failure determining unit 414b makes a success-failure determination to determine whether the estimated road surface estimated at each stage and in each division by the form estimating unit 413b is appropriate (success). Then, the process proceeds to Step S149.

### Step S149

The multistage-estimation processing unit 404b determines whether a road surface has been already estimated for the (seg_idx-1)^{th} segment. When it is determined that a road surface has been already estimated for the (seg_idx-1)^{th} segment (Step S149: Yes), the process proceeds to Step S150, and when it is determined that it has not been estimated (here, specifically, when the segment variable seg_idx=0) (Step S149: No), the process proceeds to Step S155.

### Step S150

The form estimating unit 413b estimates a road surface for the whole division (here, the (seg_idx+1)^{th}, the seg_idx^{th}, and the (seg_idx-1)^{th} divisions) including each predetermined division on which a multistage estimation process has been performed. Then, the process proceeds to Step S151.

### Step S151

The success-failure determining unit 414b makes a success-failure determination to determine whether the estimated road surface in the whole division, including each predetermined division on which a multistage estimation process has been performed, is appropriate (success). Then, the process proceeds to Step S152.

### Step S152

The road-surface selecting unit 415b determines whether there is an inappropriate estimated road surface at each stage and in each division during a multistage estimation process and whether an estimated road surface in the whole division is appropriate. When it is determined that there is an inappropriate estimated road surface at each stage and in each division during a multistage estimation process and that an estimated road surface in the whole division is appropriate (Step S152: Yes), the process proceeds to Step S153, and otherwise (Step S152: No), the process proceeds to Step S154.

### Step S153

The road-surface selecting unit 415b selects the road surface estimated in the whole division (here, the (seg_idx+1)^{th}, the seg_idx^{th}, and the (seg_idx-1)^{th} divisions) by the form estimating unit 413b as the final estimated road surface in the whole division. Then, the process proceeds to Step S155.

### Step S154

During a multistage estimation process, the road-surface selecting unit 415b selects the final estimated road surface in each segment based on the result of a success-failure determination on an estimated road surface at each stage and in each division, which is determined to be appropriate by the success-failure determining unit 414b during a success-failure determination. Then, the process proceeds to Step S155.

### Step S155

The multistage-estimation processing unit 404b increments the segment variable seg_idx, indicating the very front segment included in the currently processed predetermined division, and proceeds to process the subsequent predetermined division. Then, the process proceeds to Step S156.

### Step S156

The multistage-estimation processing unit 404b determines whether the above-described process from Step S147 to S155 has been completed for all the predetermined divisions (the predetermined divisions corresponding to (the number of segments-1)). When it is determined that the process has been completed for all the predetermined divisions, the road-surface estimating unit 400b terminates the road-surface estimation process, and when it is determined that the process has not been completed, the process returns to Step S147.

During the above-described process from Step S141 to S156, the road-surface estimating unit 400b performs the road-surface estimation process.

As described above, the road-surface estimation process performed according to the present embodiment is the combination of the road-surface estimation processes according to the first embodiment and the second embodiment; thus, when there is an estimated road surface that is determined to be inappropriate (determined to be a failure) among the estimated road surfaces at each stage and in each division of each predetermined division during a multistage estimation process, the estimated road surface in the whole division including each predetermined division is selected as the final estimated road surface. Thus, as a road surface in a division (the whole division) combining all the segments included as the candidate to be selected for an estimation process enables robust road surface estimation as compared with the first embodiment and the second embodiment and further improvements in the accuracy of a road-surface estimation process so as to have robustness to the actual operation.

Although the object recognition device installed in an automobile, which is the vehicle 70, is explained in each of the above-described embodiments, this is not a limitation. For example, it may be installed in other examples of a vehicle, such as bike, bicycle, wheelchair, or cultivator for agricultural use. Furthermore, an example of the movable object may be not only a vehicle but also a robot.

Furthermore, in each of the above-described embodiments, when at least any of the functional units in the information processing unit 30 of the object recognition device is implemented by executing a program, the program is provided by being previously installed in a ROM, or the like. A configuration may be such that the program executed by the object recognition device according to each of the above-described embodiments is provided by being stored, in the form of a file that is installable and executable, in a recording medium readable by a computer, such as a CD-ROM, a flexible disk (FD), a CD-R (compact disk recordable), or a DVD (digital versatile disk). Furthermore, a configuration may be such that the program executed by the object recognition device according to each of the above-described embodiments is stored in a computer connected via a network such as the Internet and provided by being downloaded via the network. Moreover, a configuration may be such that the program executed by the object recognition device according to each of the above-described embodiments is provided or distributed via a network such as the Internet. The program executed by the object recognition device according to each of the above-described embodiments has a modular configuration that includes at least any of the above-described functional units, and in the actual hardware, the CPU 32 reads and executes the program from the above-described ROM 33 so as to load and generate the above-described functional units in a main storage device (the RAM 34, or the like).

According to the embodiments, it is possible to improve the accuracy of a process to estimate a road surface so as to have robustness to the actual operation.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. An image processing device (400, 30) comprising:
a multistage-estimation processing unit (404) configured to perform a multistage estimation process by estimating a road surface in divisions obtained by dividing a V-disparity map at a predetermined number of stages, and to initialize a stage-number variable indicating a currently processed stage number to be 1 before the multistage estimation process starts, the V-disparity map associating positions in a vertical direction of a distance image with regard to an object and a distance value at each of the positions and representing a frequency distribution of the distance values, the multistage-estimation processing unit (404) comprising
a dividing unit (411, 403) configured to divide, at each stage, in a predetermined division of the V-disparity map in a direction of the distance value into one or more divisions by the number that corresponds to the current stage indicated by the stage-number variable;
a retrieving unit (412) configured to retrieve and select, at each stage, at least one or more sample points from frequency points voted for each of the one or more divisions;
an estimating unit (413) configured to estimate, at each stage, a form of the road surface in each of the one or more divisions based on the at least one or more sample points retrieved by the retrieving unit (412);
a determining unit (414) configured to determine whether the estimated form of the road surface estimated at each stage in each division by the estimating unit (413) is appropriate and
a selecting unit (415) configured to select at least a final estimated road surface in the predetermined division from the estimated forms of the road surface that are determined to be appropriate by the determining unit (414), wherein
the multistage-estimation processing unit (404) is configured to increment the stage-number variable after all the one or more divisions divided at the current stage having been estimated, and to shift the current stage to the next stage until the form of the road surface in all divisions at all stages has been estimated.

2. The image processing device (400, 30) according to claim 1, wherein
the dividing unit (411, 403) divides the predetermined division in accordance with a first dividing pattern, in which a number of divisions is one, and a second dividing pattern, in which a number of divisions is two, and
when the determining unit (414) determines that an estimated road surface in each of the divisions at each of the first dividing pattern and the second dividing pattern is appropriate, and when both intersection points of estimated road surfaces in the division with respect to a boundary between the two divisions divided by the second dividing pattern are located on an upper side or a lower side of an estimated road surface in the division at the first dividing pattern, the selecting unit selects an estimated road surface in each of the divisions divided at the second dividing pattern as a final estimated road surface in the predetermined division.

3. The image processing device (400, 30) according to claim 1, wherein
the dividing unit (411, 403) divides the V-disparity map into multiple segments, which are a minimum unit for the division, in a direction of the distance value,
the estimating unit (413) estimates, in the V-disparity map, a form of a road surface at each of the dividing patterns and in each of the divisions with regard to each of the predetermined divisions that are overlapped in the unit of segments, and
the selecting unit (415) selects an estimated road surface in each of the predetermined divisions from an estimated road surface estimated at each of the dividing patterns and in each of the divisions in each of the predetermined divisions and further selects a final estimated road surface in each of the segments based on an estimated road surface in each of the predetermined divisions.

4. The image processing device (400, 30) according to claim 3, further comprising a determining unit (550) configured to determine whether an estimated road surface, estimated by the estimating unit at each of the dividing patterns and in each of the divisions in each of the predetermined divisions, is an appropriate road surface, wherein
the selecting unit (415) further selects a final estimated road surface in each of the segments in accordance with a determination result by the determining unit (550).

5. The image processing device (400, 30) according to claim 1, wherein
the dividing unit (411, 403) divides the V-disparity map into multiple segments, which are a minimum unit for the division, in a direction of the distance value,
the estimating unit (413) estimates, in the V-disparity map, a form of a road surface in each of the divisions and at each of the dividing patterns with regard to each of the predetermined divisions that are overlapped in the unit of segments, and estimates a form of a road surface in an whole division including each of the predetermined divisions, and
the selecting unit (415) selects a final estimated road surface in each of the segments based on an estimated road surface estimated at each of the dividing patterns and in each of the divisions in each of the predetermined divisions and an estimated road surface in the whole division.

6. The image processing device (400, 30) according to claim 5, further comprising a determining unit (550) configured to determine whether an estimated road surface, estimated by the estimating unit (413) at each of the dividing patterns and in each of the divisions in each of the predetermined divisions and an estimated road surface in the whole division, are an appropriate road surface, wherein
when the determining unit (550) determines that an estimated road surface, estimated at each of the dividing patterns and in each of the divisions in each of the predetermined divisions is an inappropriate estimated road surface, the selecting unit (415) selects an estimated road surface in the whole division as a final estimated road surface in each of the segments.

7. The image processing device (400, 30) according to claim 1, 2, 4, or 6, wherein
when the determining unit (550) determines that an estimated road surface, estimated in each of the divisions and at each of the dividing patterns, is inappropriate, the determining unit (550) regards, as the estimated road, a road surface that is assumed to be a flat road surface or a road surface based on a road surface estimated in a frame previous to a frame corresponding to the V-disparity map.

8. The image processing device (400, 30) according to claim 1, 4, or 6, wherein
the determining unit (550) determines whether an estimated road surface, estimated at each of the dividing patterns and in each of the divisions in the predetermined division, is an appropriate road surface based on at least any one of or a combination of two or more of an angle of the estimated road surface, a number of the frequency points on the estimated road surface, continuousness between the estimated road surface and an adjacent estimated road surface, and a coefficient of correlation obtained when the estimated road surface is estimated.

9. An object recognition device (1) comprising:
a first imaging unit (10a) configured to obtain a first capture image by capturing an object;
a second imaging unit (10b) that is located at a position different from a position of the first imaging unit (10a) and that is configured to obtain a second capture image by capturing the object;
a second generating unit (300) configured to generate the distance image based on the distance value obtained from the first capture image and the second capture image with regard to the object; and
the image processing device (400, 30) according to any one of claims 1 to 8.

10. A device control system (60) comprising:
the object recognition device (1) according to claim 9; and
a control device (6) configured to control a control target based on information on the object recognized by the object recognition device (1).

11. A movable object (70) comprising the device control system (60) according to claim 10.

12. An image processing method, whereby a multistage estimation process by estimating a road surface in divisions obtained by dividing a V-disparity map at a predetermined number of stages is performed, the V-disparity map associating positions in a vertical direction of a distance image with regard to an object and a distance value at each of the positions and representing a frequency distribution of the distance values, the method comprising
initializing a stage-number variable indicating a currently processed stage number to be 1 before the multistage estimation process starts,
dividing, at each stage, in a predetermined division of the V-disparity map in a direction of the distance value into one or more divisions by the number that corresponds to the current stage indicated by the stage-number variable;
retrieving and selecting, at each stage, at least one or more sample points from frequency points voted for each of the one or more divisions;
estimating, at each stage, a form of the road surface in each of the one or more divisions based on the at least one or more sample points retrieved;
determining whether the estimated form of the road surface estimated at each stage in each division by the estimating unit (413) is appropriate and
selecting at least a final estimated road surface in the predetermined division from the estimated forms of the road surface that are determined to be appropriate by the determining unit (14), wherein
the stage-number variable is incremented after all the one or more divisions divided at the current stage having been estimated, and the current stage is shifted to the next stage until the form of the road surface in all divisions at all stages has been estimated.

13. A computer-readable medium having computer readable program codes, performed by a computer, the program codes when executed causing the computer to carry out the method of claim 12.

## Patentansprüche

1. Bildverarbeitungsvorrichtung (400, 30), die umfasst:
eine Mehrstufen-Schätzverarbeitungseinheit (404), die dazu konfiguriert ist, einen Mehrstufen-Schätzprozess durch Abschätzen einer Straßenoberfläche in Unterteilungen durchzuführen, die durch Aufteilen einer V-Disparitätskarte in eine vorbestimmte Anzahl von Stufen erhalten werden, und eine Stufennummernvariable, die eine aktuell verarbeitete Stufennummer angibt, auf 1 zu initialisieren, bevor der Mehrstufen-Schätzprozess beginnt, wobei die V-Disparitätskarte Positionen in vertikaler Richtung eines Entfernungsbildes in Bezug auf ein Objekt und einen Entfernungswert an jeder der Positionen zuordnet und eine Häufigkeitsverteilung der Entfernungswerte darstellt, wobei die Mehrstufen-Schätzverarbeitungseinheit (404) umfasst:
eine Unterteilungseinheit (411, 403), die so konfiguriert ist, dass sie in jeder Stufe in einer vorbestimmten Unterteilung die V-Disparitätskarte in einer Richtung des Entfernungswerts in eine oder mehrere Unterteilungen durch die Zahl teilt, die der aktuellen Stufe entspricht, die durch die Stufennummernvariable angegeben wird;
eine Abrufeinheit (412), die so konfiguriert ist, dass sie in jeder Stufe mindestens einen oder mehrere Abtastpunkte aus den für jede der einen oder mehreren Unterteilungen gewählten Frequenzpunkten abruft und auswählt;
eine Schätzeinheit (413), die dazu konfiguriert ist, in jeder Stufe eine Form der Straßenoberfläche in jeder der einen oder mehreren Unterteilungen basierend auf dem mindestens einen oder den mehreren von der Abrufeinheit (412) abgerufenen Stichprobenpunkt abzuschätzen;
eine Bestimmungseinheit (414), die dazu konfiguriert ist, zu bestimmen, ob die von der Schätzeinheit (413) in jeder Stufe in jeder Abteilung geschätzte Form der Straßenoberfläche geeignet ist, und
eine Auswahleinheit (415), die dazu konfiguriert ist, mindestens eine endgültige geschätzte Straßenoberfläche in der vorbestimmten Unterteilung aus den geschätzten Formen der Straßenoberfläche auszuwählen, die von der Bestimmungseinheit (414) als geeignet bestimmt wurden, wobei
die Mehrstufen-Schätzverarbeitungseinheit (404) so konfiguriert ist, dass sie die Stufenanzahlvariable erhöht, nachdem alle ein oder mehreren in der aktuellen Stufe unterteilten Unterteilungen geschätzt wurden, und die aktuelle Stufe zur nächsten Stufe verschiebt, bis die Form der Straßenoberfläche in allen Unterteilungen aller Stufen geschätzt wurde.

2. Bildverarbeitungsvorrichtung (400, 30) nach Anspruch 1, wobei
die Unterteilungseinheit (411, 403) die vorgegebene Unterteilung gemäß einem ersten Unterteilungsmuster, bei dem die Anzahl der Unterteilungen eins ist, und einem zweiten Unterteilungsmuster, bei dem die Anzahl der Unterteilungen zwei ist, unterteilt, und
wenn die Bestimmungseinheit (414) bestimmt, dass eine geschätzte Straßenoberfläche in jeder der Unterteilungen sowohl des ersten Unterteilungsmusters als auch des zweiten Unterteilungsmusters geeignet ist, und wenn beide Schnittpunkte der geschätzten Straßenoberflächen in der Unterteilung in Bezug auf eine Grenze zwischen den beiden durch das zweite Unterteilungsmuster unterteilten Unterteilungen auf einer oberen oder einer unteren Seite einer geschätzten Straßenoberfläche in der Unterteilung des ersten Unterteilungsmusters liegen, die Auswahleinheit eine geschätzte Straßenoberfläche in jeder der durch das zweite Unterteilungsmuster unterteilten Unterteilungen als endgültige geschätzte Straßenoberfläche in der vorbestimmten Unterteilung auswählt.

3. Bildverarbeitungsvorrichtung (400, 30) nach Anspruch 1, wobei
die Unterteilungseinheit (411, 403) die V-Disparitätskarte in mehrere Segmente unterteilt, die eine Mindesteinheit für die Unterteilung in Richtung des Entfernungswerts darstellen,
die Schätzeinheit (413) in der V-Disparitätskarte eine Form einer Straßenoberfläche an jedem der Unterteilungsmuster und in jeder der Unterteilungen im Hinblick auf jede der vorbestimmten Unterteilungen schätzt, die in der Einheit von Segmenten überlappen, und
die Auswahleinheit (415) eine geschätzte Straßenoberfläche in jeder der vorbestimmten Unterteilungen aus einer geschätzten Straßenoberfläche auswählt, die bei jedem der Unterteilungsmuster und in jeder der Unterteilungen in jeder der vorbestimmten Unterteilungen geschätzt wurde, und ferner eine endgültige geschätzte Straßenoberfläche in jedem der Segmente basierend auf einer geschätzten Straßenoberfläche in jeder der vorbestimmten Unterteilungen auswählt.

4. Bildverarbeitungsvorrichtung (400, 30) nach Anspruch 3, die ferner eine Bestimmungseinheit (550) umfasst, die dazu konfiguriert ist, zu bestimmen, ob eine geschätzte Straßenoberfläche, die von der Schätzeinheit an jedem der Unterteilungsmuster und in jeder der Unterteilungen in jeder der vorbestimmten Unterteilungen geschätzt wird, eine geeignete Straßenoberfläche ist, wobei
die Auswahleinheit (415) ferner eine endgültige geschätzte Straßenoberfläche in jedem der Segmente gemäß einem Bestimmungsergebnis durch die Bestimmungseinheit (550) auswählt.

5. Bildverarbeitungsvorrichtung (400, 30) nach Anspruch 1, wobei
die Unterteilungseinheit (411, 403) die V-Disparitätskarte in mehrere Segmente unterteilt, die eine Mindesteinheit für die Unterteilung in Richtung des Entfernungswerts darstellen,
die Schätzeinheit (413) in der V-Disparitätskarte eine Form einer Straßenoberfläche in jeder der Unterteilungen und an jedem der Unterteilungsmuster hinsichtlich jedes der vorbestimmten Unterteilungen schätzt, die sich in der Einheit von Segmenten überlappen, und eine Form einer Straßenoberfläche in einer gesamten Unterteilung schätzt, die jede der vorbestimmten Unterteilungen enthält, und
die Auswahleinheit (415) eine endgültige geschätzte Straßenoberfläche in jedem der Segmente auf der Grundlage einer geschätzten Straßenoberfläche auswählt, die an jedem der Unterteilungsmuster und in jeder der Unterteilungen in jeder der vorbestimmten Unterteilungen geschätzt wird, und eine geschätzte Straßenoberfläche in der gesamten Unterteilung.

6. Bildverarbeitungsvorrichtung (400, 30) nach Anspruch 5, die ferner eine Bestimmungseinheit (550) umfasst, die dazu konfiguriert ist, zu bestimmen, ob eine geschätzte Straßenoberfläche, die von der Schätzungseinheit (413) an jedem der Unterteilungsmuster und in jeder der Unterteilungen in jeder der vorbestimmten Unterteilungen geschätzt wird, und eine geschätzte Straßenoberfläche in der gesamten Unterteilung geeignete Straßenoberflächen sind, wobei
wenn die Bestimmungseinheit (550) bestimmt, dass eine geschätzte Straßenoberfläche, die an jedem der Unterteilungsmuster und in jeder der Unterteilungen in jeder der vorbestimmten Unterteilungen geschätzt wird, eine ungeeignete geschätzte Straßenoberfläche ist, die Auswahleinheit (415) eine geschätzte Straßenoberfläche in der gesamten Unterteilung als endgültige geschätzte Straßenoberfläche in jedem der Segmente auswählt.

7. Bildverarbeitungsvorrichtung (400, 30) nach Anspruch 1, 2, 4 oder 6, wobei wenn die Bestimmungseinheit (550) bestimmt, dass eine geschätzte Straßenoberfläche, die in jeder der Unterteilungen und an jedem der Unterteilungsmuster geschätzt wurde, ungeeignet ist, die Bestimmungseinheit (550) als die geschätzte Straße eine Straßenoberfläche betrachtet, von der angenommen wird, dass sie eine ebene Straßenoberfläche ist, oder eine Straßenoberfläche, die auf einer Straßenoberfläche basiert, die in einem Frame geschätzt wurde, der einem Frame vorausgeht, der der V-Disparitätskarte entspricht.

8. Bildverarbeitungsvorrichtung (400, 30) nach Anspruch 1, 4 oder 6, wobei die Bestimmungseinheit (550) bestimmt, ob eine geschätzte Straßenoberfläche, die an jedem der Unterteilungsmuster und in jeder der Unterteilungen in der vorbestimmten Unterteilung geschätzt wird, eine geeignete Straßenoberfläche ist, und zwar auf der Grundlage von mindestens einem oder einer Kombination von zwei oder mehreren der folgenden Faktoren: Winkel der geschätzten Straßenoberfläche, Anzahl der Frequenzpunkte auf der geschätzten Straßenoberfläche, Kontinuität zwischen der geschätzten Straßenoberfläche und einer benachbarten geschätzten Straßenoberfläche und Korrelationskoeffizient, der erhalten wird, wenn die geschätzte Straßenoberfläche geschätzt wird.

9. Objekterkennungsvorrichtung (1), die umfasst:
eine erste Bildgebungseinheit (10a), die dazu konfiguriert ist, durch Aufnehmen eines Objekts ein erstes Aufnahmebild zu erhalten;
eine zweite Bildgebungseinheit (10b), die sich an einer anderen Position als die erste Bildgebungseinheit (10a) befindet und dazu konfiguriert ist, durch Aufnehmen des Objekts ein zweites Aufnahmebild zu erhalten;
eine zweite Erzeugungseinheit (300), die dazu konfiguriert ist, das Entfernungsbild basierend auf dem aus dem ersten Aufnahmebild und dem zweiten Aufnahmebild in Bezug auf das Objekt erhaltenen Entfernungswert zu erzeugen; und
die Bildverarbeitungsvorrichtung (400, 30) gemäß einem der Ansprüche 1 bis 8.

10. Vorrichtungssteuerungssystem (60), das umfasst:
die Objekterkennungsvorrichtung (1) nach Anspruch 9; und
eine Steuerungsvorrichtung (6), die dazu konfiguriert ist, ein Steuerziel basierend auf Informationen über das von der Objekterkennungsvorrichtung (1) erkannte Objekt zu steuern.

11. Bewegliches Objekt (70), das das Vorrichtungssteuerungssystem (60) nach Anspruch 10 umfasst.

12. Bildverarbeitungsverfahren, bei dem ein mehrstufiger Schätzprozess durch Schätzung einer Straßenoberfläche in Unterteilungen durchgeführt wird, die durch Aufteilen einer V-Disparitätskarte in eine vorgegebene Anzahl von Unterteilungen erhalten werden, wobei die V-Disparitätskarte Positionen in vertikaler Richtung eines Entfernungsbildes in Bezug auf ein Objekt und einen Entfernungswert an jeder der Positionen verknüpft und eine Häufigkeitsverteilung der Entfernungswerte darstellt, wobei das Verfahren umfasst:
Initialisieren einer Stufennummernvariablen, die eine aktuell verarbeitete Stufennummer mit 1 angibt, bevor der mehrstufige Schätzprozess beginnt,
Teilen der V-Disparitätskarte in einer vorbestimmten Unterteilung in Richtung des Distanzwerts in jeder Stufe in eine oder mehrere Unterteilungen durch die Zahl, die der aktuellen Stufe entspricht, die durch die Stufennummernvariable angegeben wird;
Abrufen und Auswählen von mindestens einem oder mehreren Stichprobenpunkten in jeder Stufe aus den für jede der einen oder mehreren Abteilungen gewählten Frequenzpunkten;
Schätzen einer Form der Straßenoberfläche, in jedem der einen oder mehreren Unterteilungen basierend auf dem mindestens einen oder mehreren abgerufenen Stichprobenpunkten in jeder Stufe;
Bestimmen, ob die von der Schätzeinheit (413) in jeder Stufe in jeder Abteilung geschätzte Form der Straßenoberfläche geeignet ist, und
Auswählen mindestens einer endgültigen geschätzten Straßenoberfläche in der vorbestimmten Unterteilung aus den geschätzten Formen der Straßenoberfläche, die von der Bestimmungseinheit (14) als geeignet bestimmt werden, wobei
die Stufennummernvariable erhöht wird, nachdem die eine oder alle der mehreren in der aktuellen Stufe unterteilten Unterteilungen geschätzt wurden, und die aktuelle Stufe zur nächsten Stufe verschoben wird, bis die Form der Straßenoberfläche in allen Unterteilungen aller Stufen geschätzt wurde.

13. Computerlesbares Medium mit computerlesbaren Programmcodes, die von einem Computer ausgeführt werden, wobei die Programmcodes bei Ausführung den Computer veranlassen, dass das Verfahren nach Anspruch 12 ausgeführt wird.

## Revendications

1. Dispositif de traitement d'images (400, 30) comprenant :
une unité de traitement d'estimation à étages multiples (404) conçue pour réaliser un processus d'estimation à étages multiples en estimant une surface routière dans des divisions obtenues par division d'une carte de disparité V selon un nombre prédéterminé d'étages, et pour initialiser une variable de numéro d'étage, indiquant un numéro d'étage actuellement traité, à 1 avant le début du processus d'estimation à étages multiples, la carte de disparité V associant des positions dans le sens vertical d'une image de distance par rapport à un objet et une valeur de distance en chacune des positions et représentant une distribution de fréquence des valeurs de distance, l'unité de traitement d'estimation à étages multiples (404) comprenant :
une unité de division (411, 403) conçue pour diviser, à chaque étage, dans une division prédéterminée de la carte de disparité V dans le sens de la valeur de distance, en une ou plusieurs divisions selon le nombre qui correspond à l'étage actuel indiqué par la variable de numéro d'étage,
une unité de récupération (412) conçue pour récupérer et sélectionner, à chaque étage, au moins un ou plusieurs points d'échantillonnage à partir des points de fréquence soumis à un vote dans chacune des une ou plusieurs divisions,
une unité d'estimation (413) conçue pour estimer, à chaque étage, la forme de la surface routière dans chacune des une ou plusieurs divisions en fonction du ou des points d'échantillonnage récupérés par l'unité de récupération (412),
une unité de détermination (414) conçue pour déterminer si la forme estimée de la surface routière estimée à chaque étage dans chaque division par l'unité d'estimation (413) est appropriée, et
une unité de sélection (415) conçue pour sélectionner au moins une surface routière estimée finale dans la division prédéterminée à partir des formes estimées de la surface routière qui sont déterminées comme étant appropriées par l'unité de détermination (414) ;
ladite unité de traitement d'estimation à étages multiples (404) étant conçue pour incrémenter la variable de numéro d'étage après que la ou les divisions divisées à l'étage actuel ont toutes été estimées, et pour passer de l'étage actuel à l'étage suivante jusqu'à ce que la forme de la surface routière dans toutes les divisions à tous les étages ait été estimée.

2. Dispositif de traitement d'images (400, 30) selon la revendication 1, dans lequel
l'unité de division (411, 403) divise la division prédéterminée selon un premier motif de division dans lequel le nombre de divisions est de un, et un deuxième motif de division dans lequel le nombre de divisions est de deux, et
lorsque l'unité de détermination (414) détermine qu'une surface routière estimée dans chacune des divisions au niveau du premier motif de division et du deuxième motif de division est appropriée, et lorsque les deux points d'intersection des surfaces routières estimées dans la division par rapport à une limite entre les deux divisions divisées par le deuxième motif de division sont situés sur un côté supérieur ou un côté inférieur d'une surface routière estimée dans la division au niveau du premier motif de division, l'unité de sélection sélectionne une surface routière estimée dans chacune des divisions divisées au niveau du deuxième motif de division en tant que surface routière estimée finale dans la division prédéterminée.

3. Dispositif de traitement d'images (400, 30) selon la revendication 1, dans lequel
l'unité de division (411, 403) divise la carte de disparité V en de multiples segments, consistant en une unité minimale pour la division, dans le sens de la valeur de distance,
l'unité d'estimation (413) estime, dans la carte de disparité V, la forme d'une surface routière au niveau de chacun des motifs de division et dans chacune des divisions par rapport à chacune des divisions prédéterminées qui se chevauchent dans l'unité de segments, et
l'unité de sélection (415) sélectionne une surface routière estimée dans chacune des divisions prédéterminées à partir d'une surface routière estimée, qui est estimée au niveau de chacun des motifs de division et dans chacune des divisions de chacune des divisions prédéterminées et sélectionne en outre une surface routière estimée finale dans chacun des segments en fonction d'une surface routière estimée dans chacune des divisions prédéterminées.

4. Dispositif de traitement d'images (400, 30) selon la revendication 3, comprenant en outre une unité de détermination (550) conçue pour déterminer si une surface routière estimée, qui est estimée par l'unité d'estimation au niveau de chacun des motifs de division et dans chacune des divisions de chacune des divisions prédéterminées, est une surface routière appropriée ;
ladite unité de sélection (415) sélectionnant en outre une surface routière estimée finale dans chacun des segments selon un résultat de détermination fourni par l'unité de détermination (550).

5. Dispositif de traitement d'images (400, 30) selon la revendication 1, dans lequel
l'unité de division (411, 403) divise la carte de disparité V en de multiples segments, consistant en une unité minimale pour la division, dans le sens de la valeur de distance,
l'unité d'estimation (413) estime, dans la carte de disparité V, la forme d'une surface routière dans chacune des divisions et au niveau de chacun des motifs de division par rapport à chacune des divisions prédéterminées qui se chevauchent dans l'unité de segments, et estime la forme d'une surface routière dans une division entière comprenant chacune des divisions prédéterminées, et
l'unité de sélection (415) sélectionne une surface routière estimée finale dans chacun des segments en fonction d'une surface routière estimée qui est estimée au niveau de chacun des motifs de division et dans chacune des divisions de chacune des divisions prédéterminées et d'une surface routière estimée dans la division entière.

6. Dispositif de traitement d'images (400, 30) selon la revendication 5, comprenant en outre une unité de détermination (550) conçue pour déterminer si une surface routière estimée, qui est estimée par l'unité d'estimation (413) au niveau de chacun des motifs de division et dans chacune des divisions de chacune des divisions prédéterminées, et une surface routière estimée dans la division entière sont une surface routière appropriée ; étant entendu que
lorsque l'unité de détermination (550) détermine qu'une surface routière estimée, qui est estimée au niveau de chacun des motifs de division et dans chacune des divisions de chacune des divisions prédéterminées, est une surface routière estimée inappropriée, l'unité de sélection (415) sélectionne une surface routière estimée dans la division entière comme surface routière estimée finale dans chacun des segments.

7. Dispositif de traitement d'images (400, 30) selon la revendication 1, 2, 4 ou 6, dans lequel, lorsque l'unité de détermination (550) détermine qu'une surface routière estimée, qui est estimée dans chacune des divisions et au niveau de chacun des motifs de division, est inappropriée, l'unité de détermination (550) considère, comme route estimée, une surface routière censée être une surface routière plane ou une surface routière fonction d'une surface routière estimée dans une trame antérieure à une trame correspondant à la carte de disparité V.

8. Dispositif de traitement d'images (400, 30) selon la revendication 1, 4 ou 6, dans lequel l'unité de détermination (550) détermine si une surface routière estimée, qui est estimée au niveau de chacun des motifs de division et dans chacune des divisions de la division prédéterminée, est une surface routière appropriée en fonction d'au moins un ou d'une combinaison d'au moins deux des facteurs suivants : l'angle de la surface routière estimée, le nombre de points de fréquence sur la surface routière estimée, une continuité entre la surface routière estimée et une surface routière estimée adjacente, et un coefficient de corrélation obtenu lorsque la surface routière estimée est estimée.

9. Dispositif de reconnaissance d'objets (1) comprenant :
une première unité de prise de vue (10a) conçue pour obtenir une première image capturée par capture d'un objet,
une deuxième unité de prise de vue (10b) qui est située en une position différente de celle de la première unité de prise de vue (10a) et qui est conçue pour obtenir une deuxième image capturée par capture de l'objet,
une deuxième unité de génération (300) conçue pour générer l'image de distance en fonction de la valeur de distance obtenue à partir de la première image capturée et de la deuxième image capturée par rapport à l'objet, et
le dispositif de traitement d'images (400, 30) selon l'une quelconque des revendications 1 à 8.

10. Système de commande de dispositif (60) comprenant :
le dispositif de reconnaissance d'objet (1) selon la revendication 9, et
un dispositif de commande (6) conçu pour commander une cible de commande en fonction d'informations portant sur l'objet reconnu par le dispositif de reconnaissance d'objet (1).

11. Objet mobile (70) comprenant le système de commande de dispositif (60) selon la revendication 10.

12. Procédé de traitement d'images, moyennant lequel un processus d'estimation à étages multiples est réalisé par estimation d'une surface routière dans des divisions obtenues par division d'une carte de disparité V selon un nombre prédéterminé d'étages, la carte de disparité V associant des positions dans le sens vertical d'une image de distance par rapport à un objet et une valeur de distance en chacune des positions et représentant une distribution de fréquence des valeurs de distance, le procédé comprenant :
l'initialisation d'une variable de numéro d'étage, indiquant un numéro d'étage actuellement traité, à 1 avant le début du processus d'estimation à étages multiples,
la division, à chaque étage, dans une division prédéterminée de la carte de disparité V dans le sens de la valeur de distance, en une ou plusieurs divisions selon le nombre qui correspond à l'étage actuel indiqué par la variable de numéro d'étage,
la récupération et la sélection, à chaque étage, d'au moins un ou plusieurs points d'échantillonnage à partir des points de fréquence soumis à un vote dans chacune des une ou plusieurs divisions,
l'estimation, à chaque étage, de la forme de la surface routière dans chacune des une ou plusieurs divisions en fonction du ou des points d'échantillonnage récupérés,
la détermination du fait que la forme estimée de la surface routière estimée à chaque étage dans chaque division par l'unité d'estimation (413) est appropriée ou non, et
la sélection d'au moins une surface routière estimée finale dans la division prédéterminée à partir des formes estimées de la surface routière qui sont déterminées comme étant appropriées par l'unité de détermination (14) ;
ladite variable de numéro d'étage étant incrémentée après que la ou les divisions divisées à l'étage actuel ont toutes été estimées, et l'étage actuel passant à l'étage suivant jusqu'à ce que la forme de la surface routière dans toutes les divisions à tous les étages ait été estimée.

13. Support lisible par ordinateur doté de codes de programme lisibles par ordinateur et réalisés par un ordinateur, l'exécution desdits codes de programme amenant l'ordinateur à mettre en œuvre le procédé selon la revendication 12.
